(19) Europäisches Patentamt
European Patent Office
Office européen des brevets

(11) **EP 3 217 003 A1**

(12) **EUROPEAN PATENT APPLICATION**
published in accordance with Art. 153(4) EPC

(43) Date of publication:
**13.09.2017 Bulletin 2017/37**

(21) Application number: **15856954.1**

(22) Date of filing: **16.09.2015**

(51) Int Cl.:
***F02D 21/08*** (2006.01) ***F02D 41/02*** (2006.01)
***F02D 41/04*** (2006.01) ***F02D 45/00*** (2006.01)
***F02M 26/00*** (2016.01) ***F02M 26/14*** (2016.01)
***F02P 5/15*** (2006.01)

(86) International application number:
**PCT/JP2015/076210**

(87) International publication number:
**WO 2016/072157 (12.05.2016 Gazette 2016/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **06.11.2014 JP 2014225701**

(71) Applicant: **Hitachi Automotive Systems, Ltd.**
**Hitachinaka-shi, Ibaraki 312-8503 (JP)**

(72) Inventors:
- **OGATA Kenichiroh**
  **Tokyo 100-8280 (JP)**
- **OKAMOTO Takashi**
  **Hitachinaka-shi**
  **Ibaraki 312-8503 (JP)**
- **ARIHARA Yoshinobu**
  **Hitachinaka-shi**
  **Ibaraki 312-8503 (JP)**
- **ORYOJI Kazuhiro**
  **Tokyo 100-8280 (JP)**
- **SUKEGAWA Yoshihiro**
  **Tokyo 100-8280 (JP)**
- **KIHARA Yuusuke**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

# (54) ENGINE CONTROL DEVICE

(57) The purpose of the present invention is to provide an engine control device with which it is possible to minimize decreases in combustion speed even when the EGR rate has been increased. The present invention is an engine control device for: controlling an engine provided with an injector for injecting fuel directly into a cylinder, an ignition device for igniting the injected fuel, and an EGR means capable of recycling combustion gas and varying the EGR rate of the recycled combustion gas; and commanding the injector to perform multiple injections during one cycle, wherein a command is given to perform a control for increasing the injection quantity per compression stroke relative to the total injection quantity in one cycle so that the injection quantity per compression stroke is greater when the EGR rate is high than when the EGR rate is low, and/or a control for increasing the number of injections per compression stroke relative to the total number of injections in one cycle so that the number of injections per compression stroke is greater when the EGR rate is high than when the EGR rate is low.

FIG. 11

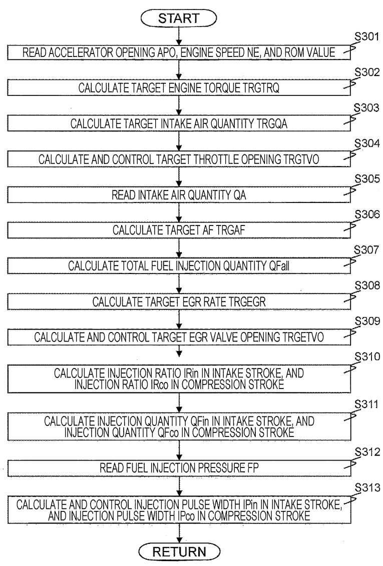


EP 3 217 003 A1

## Description

Technical Field

The present invention relates to an engine control device.

Background Art

High efficiency and exhaust purification are strongly required for automobiles in these days from the viewpoint of environmental conservation and effective use of resources. As a way of the high efficiency, an engine which includes an intra-cylinder direct fuel injection device and an exhaust recirculation device is being developed (for example, PTL 1).

The intra-cylinder direct fuel injection device direct injects the fuel into the cylinder using a fuel injection valve (hereinafter, referred to as injector), and effectively suppresses an abnormal combustion by cooling the inside of the cylinder. The exhaust recirculation device (hereinafter, referred to as EGR unit) recirculates the exhaust discharged from the engine to an intake pipe and causes the exhaust to flow again into the cylinder to be combusted, and suppresses an abnormal combustion by increasing a specific heat of the gas in the cylinder to reduce the temperature of the gas. The suppression effect of the abnormal combustion can allow the engine to have a high compression ratio or to be downsized, and obtains a high efficiency. In addition, an opening of an intake air control valve (hereinafter, referred to as throttle) can be large by increasing a recirculation gas rate (hereinafter, referred to as EGR rate), and a loss (hereinafter, referred to as pump loss) caused by a difference in pressure between an exhaust stroke and an intake stroke of the engine can be reduced.

Citation List

Patent Literature

PTL 1: JP 2004-156519 A

Summary of Invention

Technical Problem

However, when the EGR rate is increased by the EGR unit, the combustion in the cylinder occurs slowly (that is, the combustion speed is lowered). This is because the combusted gas quantity occupied in an air mixture in the cylinder is increased and thus an oxygen quantity necessary for the combustion is reduced, so that a propagation speed of flame is lowered. In this way, when the combustion occurs slowly, the combustion speed is lowered. Therefore, there is easily caused knocking, the combustion efficiency is degraded since the combustion speed is lowered, and the fuel efficiency is degraded since the combustion variation is increased.

An object of the invention is to provide an engine control device which can suppress the combustion speed from being lowered even in a case where the EGR rate is high.

Solution to Problem

The present invention is an engine control device that controls an engine, the engine including an injector to direct inject fuel into a cylinder, an ignition device to ignite the injected fuel, and a EGR unit that is capable of recycling fuel gas and changing an EGR rate of the recycled fuel gas, and issues a command to the injector to perform a plurality of times of injection during one cycle, wherein a command is issued to perform at least any one of controls: a control that an injection quantity in a compression stroke is increased with respect to a total injection quantity during one cycle in a case where the EGR rate is high compared to a case where the EGR rate is small; and a control that the number of times of injection in the compression stroke is increased with respect to a total number of times of injection during one cycle in a case where the EGR rate is high compared to a case that the EGR rate is small.

Alternatively, the present invention is an engine control device that controls an engine, the engine including an injector to direct inject fuel into a cylinder, an ignition device to ignite the injected fuel, and a EGR unit that is capable of recycling fuel gas and changing an EGR rate of the recycled fuel gas, wherein a fuel injection ends at timing near an ignition timing of the ignition device in a case where the EGR rate is high compared to a case where the EGR rate is small.

Advantageous Effects of Invention

According to the invention, it is possible to provide an engine control device which can suppress a combustion speed from being lowered even in a case where an EGR rate is high.

Brief Description of Drawings

[FIG. 1] FIG. 1 is a diagram illustrating a configuration of an automobile engine system to which an engine control device is applied according to a first embodiment of the invention.

[FIG. 2] FIG. 2 is a system block diagram illustrating a configuration of an ECU 1 according to the first embodiment.

[FIG. 3] FIG. 3 is a characteristic diagram illustrating a characteristic of a target engine torque with respect to an accelerator pedal opening and an engine speed, and a characteristic of a target intake air quantity with respect to the target engine torque in the first embodiment.

[FIG. 4] FIG. 4 is a characteristic diagram illustrating a relation of a target throttle opening with respect to the target intake air quantity, and a target air-fuel ratio with respect to the intake air quantity and the engine speed in the first embodiment.

[FIG. 5] FIG. 5 is a characteristic diagram illustrating a relation of a target EGR rate with respect to a total fuel injection quantity and the engine speed, and a relation between the target EGR rate and a target EGR valve opening in the first embodiment.

[FIG. 6] FIG. 6 is a characteristic diagram illustrating a relation of the number of times of injection in an intake stroke and the number of times of injection in a compression stroke with respect to an injection ratio in the intake stroke and the compression stroke with respect to the target EGR valve opening and the target EGR valve opening TRGETVO in the first embodiment.

[FIG. 7] FIG. 7 is a characteristic diagram illustrating characteristics of an injection pulse width with respect to an injection quantity and a fuel injection pressure in the intake stroke and the compression stroke in the first embodiment.

[FIG. 8] FIG. 8 is a logic diagram illustrating a relation of inputs and outputs to set the target throttle opening, the target AF, and the target EGR valve opening in the first embodiment.

[FIG. 9] FIG. 9 is a logic diagram illustrating a relation of inputs and outputs to set the injection pulse width in the intake stroke and the injection pulse width in the compression stroke with respect to the target EGR valve opening TRGETVO in the first embodiment.

[FIG. 10] FIG. 10 is a timing chart of a fuel injection control on the basis of the target EGR valve opening in the first embodiment.

[FIG. 11] FIG. 11 is a flowchart illustrating a control content in the ECU 1 in the first embodiment.

[FIG. 12] FIG. 12 is a characteristic diagram illustrating a relation of the number of times of injection in the intake stroke and the number of times of injection in the compression stroke with respect to the injection ratio in the intake stroke and the compression stroke with respect to the target EGR valve opening and the target EGR valve opening TRGETVO in a second embodiment.

[FIG. 13] FIG. 13 is a logic diagram illustrating a relation of inputs and outputs to set the injection pulse width in the intake stroke and the injection pulse width in the compression stroke with respect to the target EGR valve opening TRGETVO in the second embodiment.

[FIG. 14] FIG. 14 is a timing chart of the fuel injection control on the basis of the target EGR valve opening in the second embodiment.

[FIG. 15] FIG. 15 is a flowchart illustrating a control content in the ECU 1 in the second embodiment.

[FIG. 16] FIG. 16 is a characteristic diagram illustrating a signal of an intra-cylinder pressure sensor and a pressure vibration intensity in a third embodiment.

[FIG. 17] FIG. 17 is a characteristic diagram illustrating a characteristic of an ion current sensor and a characteristic of an EGR flow rate QEGR and a nitrogen oxide concentration with respect to an ion integration value in the third embodiment.

[FIG. 18] FIG. 18 is a characteristic diagram of a signal of a knock sensor and a vibration intensity in the third embodiment.

[FIG. 19] FIG. 19 is a characteristic diagram of a signal of the intra-cylinder pressure sensor and a volume of a combustion chamber in the third embodiment.

[FIG. 20] FIG. 20 is a characteristic diagram of a signal of a crank angle sensor and a rotation speed in the third embodiment.

[FIG. 21] FIG. 21 is a characteristic diagram of an operation region in the third embodiment.

[FIG. 22] FIG. 22 is a characteristic diagram of an ignition timing in the third embodiment.

[FIG. 23] FIG. 23 is a characteristic diagram of an intensity limit which is set in a high load H condition in the third embodiment.

[FIG. 24] FIG. 24 is a characteristic diagram illustrating a correction quantity of the injection ratio and a correction quantity of the ignition timing advance in the high load H condition in the third embodiment.

[FIG. 25] FIG. 25 is a characteristic diagram illustrating a characteristic of a pump work limit which is set in a low load L condition and a characteristic of a correction quantity of the EGR valve opening with respect to a pump work in the third embodiment.

[FIG. 26] FIG. 26 is a characteristic diagram illustrating a characteristic of a rotational variation limit which is set in the low load L condition and a characteristic of the correction quantity of the EGR valve closing with respect to the rotational variation in the third embodiment.

[FIG. 27] FIG. 27 is a timing chart illustrating a control of a fuel injection and an ignition timing on the basis of the target EGR valve opening in the high load H condition in the third embodiment.

[FIG. 28] FIG. 28 is a timing chart illustrating a control of the fuel injection and the ignition timing on the basis of the target EGR valve opening in the low load L condition in the third embodiment.

[FIG. 29] FIG. 29 is a flowchart illustrating a control content in the ECU 1 in the third embodiment.

[FIG. 30] FIG. 30 is a timing chart of the fuel injection on the basis of the EGR valve opening until the EGR valve is opened after the engine starts in the third embodiment.

[FIG. 31] FIG. 31 is a timing chart of the fuel injection on the basis of the EGR valve opening when a vehicle start request is issued during a period until the EGR is opened after the engine starts in the third embodiment.

[FIG. 32] FIG. 32 is a diagram illustrating a relation between a target inner EGR ratio TRGinEGR and a target overlap TRGOL in a modification.

Description of Embodiments

Hereinafter, embodiments of the invention will be described using the drawings.

First embodiment

Hereinafter, the description will be given about a configuration and an operation of a control device of an engine of this embodiment using FIGS. 1 to 11. FIGS. 1 to 11 are diagrams illustrating the configuration of a system which includes an injection device to directly inject fuel into a cylinder and a recirculation device to recirculate exhaust gas toward an intake side in this embodiment. The control device of the engine performs a spilt injection control to issue a command to perform a plurality of times of injection in one stroke. The control device of the engine is applied to an automobile engine. In a case where an exhaust gas rate recirculated by the recirculation device is large, the control device issues a command such that an injection ratio in the compression stroke is increased with respect to a total injection quantity in one stroke, or the number of times of injection in the compression stroke is increased with respect to a total number of times of injection in one stroke, or a command such that both are increased compared to a case where the exhaust gas rate is small.

FIG. 1 is a diagram illustrating a configuration of an automobile engine system according to this embodiment. An engine 100 is an automobile engine which performs an ignition combustion. An air flow sensor 3 which measures an intake air quantity, a throttle 5 which adjusts an intake pipe pressure, an intake air temperature/humidity sensor 4 which serves as a detector of a temperature and a humidity of the intake air, and a tumble valve 6 which changes an area in the intake pipe are provided at appropriate positions in an intake pipe 11. The air flow sensor 3 may be an intake air pressure sensor.

In addition, the engine 100 is provided with an injector 7 which injects the fuel into a combustion chamber 17 and an ignition plug 19 which supplies ignition energy. Variable valves 12 which adjust an intake air and a discharging exhaust with respect to the combustion chamber 17 are provided at appropriate positions of the engine 100. A common rail 9 which is connected to the injector 7 to supply the fuel, a fuel pump 8 which pumps the fuel to the common rail 9, and a fuel pipe 10 which supplies the fuel to the fuel pump 8 are provided at appropriate positions of the engine 100. In addition, a fuel pressure sensor serving as a fuel pressure detector which measures a pressure of the fuel is provided at an appropriate position of the common rail 9. Herein, the fuel pressure sensor may be a fuel temperature sensor.

The ignition plug 19 is connected to an ignition coil 20, and controls the ignition energy by the ignition coil 20. Furthermore, a three-way catalyst 23 which purifies the exhaust, an exhaust temperature sensor 24 serving as an exhaust temperature detector which measures the temperature of the exhaust on the upstream side of the three-way catalyst 23, an air-fuel ratio sensor 25 serving as an air-fuel ratio detector which detects the air-fuel ratio of the exhaust on the upstream side of the three-way catalyst 23, and an exhaust recirculation pipe 28 which is connected to the intake pipe 11 are provided at appropriate positions of an exhaust pipe 22. The air-fuel ratio sensor 25 may be an oxygen concentration sensor.

In addition, the engine 100 is provided with an EGR unit which is capable of recycling fuel gas and changing an EGR rate of the recycled fuel gas. The EGR unit of this embodiment is configured by an external EGR device which is provided with the exhaust recirculation pipe 28 connecting the exhaust pipe 22 and the intake pipe 11, and an EGR valve 26 which adjusts a flow rate of the gas flowing in the exhaust recirculation pipe 28. In addition, the EGR unit is provided with an EGR cooler 27 which adjusts the temperature of the recirculating gas at an appropriate position of the exhaust recirculation pipe 28. The EGR cooler 27 also serves as a recirculating gas temperature detector which detects the temperature of the recirculating gas. In addition, the EGR cooler 27 includes an inlet and an outlet of a cooling water to adjust the temperature of the recirculating gas, and provided with a cooling water pump 29 to control the flow rate of the cooling water and a cooling water path switching valve 30 at appropriate positions of the engine 100. In addition, a crank shaft 14 is provided with a crank angle sensor 15 to detect an angle and a rotation speed of the crank shaft 14, and a moving speed of a piston 13.

In addition, the engine 100 is provided with a knock sensor 16 to detect a vibration of the engine 100 as an acceleration. In addition, an ion current sensor 21 is provided at an appropriate position of the engine 100 to detect an ion quantity in the engine. In addition, the ion current sensor 21 may be an intra-cylinder pressure sensor to detect a pressure in the engine. In addition, the cooling water temperature sensor 18 is provided at an appropriate position of the engine 100 to detect a cooling water temperature inside the engine 100.

Signals obtained from the air flow sensor 3, the intake air temperature/humidity sensor 4, the crank angle sensor 15, the knock sensor 16, the cooling water temperature sensor 18, the ion current sensor 21, the exhaust temperature sensor 24, the air-fuel ratio sensor 25, and the EGR cooler 27 serving as a recirculating gas temperature detector are transmitted to an engine control unit (hereinafter, referred to as ECU 1). A signal obtained from an accelerator pedal opening sensor 2 is transmitted to the ECU 1. The accelerator pedal opening sensor 2 detects a stepping amount of the accelerator pedal (that is, the accelerator pedal opening).

The ECU 1 calculates a request torque on the basis of an output signal of the accelerator pedal opening sensor 2. In other words, the accelerator pedal opening sensor 2 is used as a request torque detection sensor which detects a request torque to the engine 100. The ECU 1 calculates the angle and the rotation speed of the crank shaft 14, and the moving speed of the piston 13 on the basis of an output signal of the crank angle sensor 15. The ECU 1 suitably calculates the main operation quantities of the engine 100 such as an opening of the throttle 5, an opening of the tumble valve 6, an injection signal of the injector 7, a drive signal of the fuel pump 8, an open/close timing of the variable valve 12, an ignition signal of the ignition coil 20, an opening of the EGR valve 26, and a drive signal of the cooling water pump 29 and a drive signal of the cooling water switching valve for the cooling water control on the basis of an operation state of the engine 100 which is obtained from the outputs of various types of sensors.

A throttle opening calculated by the ECU 1 is transmitted to the throttle 5 as a throttle drive signal. A tumble valve opening calculated by the ECU 1 is transmitted to the tumble valve 6 as a tumble valve drive signal. An injection signal calculated by the ECU 1 is converted into a pulse signal to open the injector and transmitted to the injector 7. A fuel pump drive signal calculated by the ECU 1 is transmitted to the fuel pump 8. A valve open/close timing calculated by the ECU 1 is transmitted to the variable valve 12 as a variable valve drive signal. An ignition signal calculated by the ECU 1 is transmitted to the ignition coil 20 as an ignition signal. An EGR valve opening calculated by the ECU 1 is transmitted to the EGR valve 26 as an EGR valve drive signal. A cooling water control signal calculated by the ECU 1 is transmitted to the cooling water pump 29 and the cooling water path switching valve 30 as a cooling water control drive signal.

The fuel is injected to a mixture of an air flowing from the intake pipe 11 into the combustion chamber 17 through the intake valve and the recirculating gas recirculating from the exhaust pipe 22 through the EGR valve 26 and the EGR cooler 27, and to form a combustible air mixture. The combustible air mixture is exploded at a predetermined ignition timing by a spark generated from the ignition plug 19 to which the ignition energy is supplied from the ignition coil 20. The piston 13 is pressed down by the combustion pressure to be a drive force of the engine 100. The exhaust after explosion is sent to the three-way catalyst 23 through the exhaust pipe 22, and the exhaust component is purified in the three-way catalyst 23 and then discharged.

Herein, the ignition timing is set to a predetermined time point from the compression stroke to an expansion stroke, and generally set to a time point shifting from the compression stroke to the expansion stroke (that is, at the time when the compression stroke ends). However, for example, at the time when the engine starts, the ignition timing may be retarded to the expansion stroke after a compression top dead center.

The engine 100 is mounted in an automobile, and information on the running state of the automobile is transmitted to the ECU 1. In addition, the signals of a vehicle speed sensor which is attached to a vehicle body where the engine is mounted or a wheel, and a shift lever position sensor which detects the position of a shift lever to control a transmission attached to the vehicle body where the engine is mounted are directly input to the ECU 1. Alternatively, the signals are input from a control device different from the ECU 1.

FIG. 2 is a system block diagram illustrating a configuration of the ECU 1 according to this embodiment. The output signals of the accelerator pedal opening sensor 2, the air flow sensor 3, the intake air temperature/humidity sensor 4, the crank angle sensor 15, the knock sensor 16, the cooling water temperature sensor 18, the ion current sensor 21, the exhaust temperature sensor 24, the air-fuel ratio sensor 25, and the recirculating gas temperature detector 27 provided in the EGR cooler are input to an input circuit 50a of the ECU 1. However, the input signals are not limited to the above.

The input signals of the respective sensors are transmitted to the respective input/output ports in an input/output port 50b. The value transmitted to the input/output port 50b is stored in a RAM 50c, and subjected to a calculation processing by a CPU 50e. A control program describing the calculation processing content is written in a ROM 50d in advance. The value which is calculated according to the control program and indicates an operation quantity of each actuator is stored in the RAM 50c, transmitted to the output port of the input/output port 50b, and then transmitted to each actuator through each drive circuit.

In the case of this embodiment, a throttle drive circuit 50f, a tumble valve drive circuit 50g, an injector drive circuit 50h, a fuel pump drive circuit 50i, a variable valve drive circuit 50j, an ignition signal output circuit 50k, an EGR valve drive circuit 501, and a cooling water control drive circuit 50m are provided as drive circuits. The respective circuits control the throttle 5, the tumble valve 6, the injector 7, the fuel pump 8, the variable valve 12, the ignition coil 20, the EGR valve 26, the cooling water pump, or the cooling water path switching valve 30. In this embodiment, the drive circuit is provided in the ECU 1, but the invention is not limited thereto. Some of the drive circuits may be provided in the ECU 1.

FIG. 3 is a characteristic diagram illustrating a characteristic of the target engine torque with respect to the accelerator pedal opening and the engine speed and a characteristic of the target intake air quantity with respect to the target engine torque according to this embodiment. The Z axis in the upper drawing indicates a target engine torque TRGTRQ, the X axis indicates an accelerator pedal opening APO, and the Y axis indicates an engine speed NE. A characteristic of the target engine torque TRGTRQ with respect to the accelerator pedal opening APO and the engine speed NE is illustrated. The target engine torque TRGTRQ is increased according to an increase of the accelerator pedal opening APO and an increase of the engine speed NE. The vertical axis of the lower drawing indicates a target intake air quantity TRGQA, and the horizontal axis indicates the target engine torque TRGTRQ obtained from the characteristic diagram. The relation shows that the target intake air quantity TRGQA is increased when the target engine torque TRGTRQ is increased.

FIG. 4 is a characteristic diagram illustrating a relation of the target throttle opening with respect to the target intake air quantity and a target air-fuel ratio (hereinafter, referred to as target AF) with respect to the intake air quantity and the engine speed according to this embodiment. The vertical axis of the upper drawing indicates a target throttle opening TRGTVO, and the horizontal axis indicates the target intake air quantity TRGQA. The relation shows that the target throttle opening TRGTVO is increased when the target intake air quantity TRGQA is increased. With the use of the relation, the target throttle opening TRGTVO is calculated, and an open/close command is sent to the throttle 5. The vertical axis of the lower drawing is a characteristic diagram illustrating a characteristic of the target AF with respect to an intake air quantity QA obtained from the input signal of the air flow sensor 3 and the engine speed NE. At the time when the intake air quantity QA is small, the target AF is set to a lean AF. As the intake air quantity QA is increased, the target AF is set to a stoichiometric AF. At the time when the engine speed NE is high and the intake air quantity QA is large, the target AF is set to a rich AF. Herein, the characteristic diagram of the target AF is not limited to the above characteristic, and the entire region may be set to the stoichiometric AF or the lean AF.

By the way, in a case where the EGR rate of the exhaust gas introduced again by the EGR unit is high, the engine control device according to this embodiment is configured to end the fuel injection at a timing near the ignition time point of an ignition device compared to a case where the EGR rate is small. As described above, since the ignition timing is normally set at the time when the compression stroke ends, in a case where the EGR rate is high, the end point of the fuel injection comes close to the start point of the ignition. Therefore, in a case where the injection period of the fuel is across the intake stroke and the compression stroke, a ratio of the injection quantity in the compression stroke with respect to a total injection quantity in one cycle (that is, four strokes of intake, compression, combustion, and exhaust) is increased. For this reason, the control of the embodiment herein will be given in the viewpoint of the injection ratio in the compression stroke with respect to a total fuel injection quantity QFall in one cycle, or the injection ratio in the intake stroke and the compression stroke.

FIG. 5 is a characteristic diagram illustrating a relation between the total fuel injection quantity and a target EGR rate with respect to the engine speed, and a relation between the target EGR rate and a target EGR valve opening according to this embodiment. The vertical axis of the upper drawing indicates the total fuel injection quantity QFall calculated from the intake air quantity QA and the target AF, and the horizontal axis indicates the engine speed NE. A target EGR rate TRGEGR is increased or decreased as the engine speed NE is increased and the total fuel injection quantity QFall is increased. Herein, a method of setting the target EGR rate is not limited to the example. The target EGR rate TRGEGR may be constant in all the region, or may be decreased to be large, intermediate, and small as the total fuel injection quantity QFall is increased. The vertical axis of the lower drawing indicates a target EGR valve opening TRGETVO, and the horizontal axis indicates the target EGR rate TRGEGR obtained from the characteristic diagram. When the target EGR rate TRGEGR is increased, the target EGR valve opening TRGETVO is increased. A command is issued to the EGR valve 26 to be opened or closed according to the target EGR valve opening TRGETVO.

FIG. 6 is a characteristic diagram illustrating a relation of the injection ratio in the intake stroke and the compression stroke with respect to the target EGR valve opening according to this embodiment. The horizontal axis indicates the target EGR valve opening TRGETVO. The vertical axis indicates the injection ratio in which a total sum of the injection quantities or the injection pulse signals in the intake stroke and the compression stroke is 100%. When the target EGR valve opening TRGETVO is increased, an injection ratio IRin in the intake stroke is reduced, and an injection ratio IRco in the compression stroke is increased.

FIG. 7 is a characteristic diagram illustrating a characteristic of the injection pulse width with respect to the injection quantity and the fuel injection pressure in the intake stroke and the compression stroke according to this embodiment. An injection pulse width IPin in the intake stroke is calculated according to a fuel injection quantity QFin and a fuel injection pressure FP in the intake stroke. The injection pulse width IPin in the intake stroke is shortened as the fuel injection quantity QFin in the intake stroke is reduced and the fuel injection pressure FP is increased. An injection pulse width IPco in the compression stroke is calculated according to a fuel injection quantity QFco and the fuel injection pressure FP in the compression stroke. The injection pulse width IPco in the compression stroke is shortened as the fuel injection quantity QFco is reduced in the compression stroke and the fuel injection pressure FP is increased.

FIG. 8 is a logic diagram illustrating a relation of inputs and outputs to set the target throttle opening, the target AF, and the target EGR valve opening in this embodiment. The accelerator pedal opening APO and the engine speed NE are input to a target air quantity calculation unit. A target air quantity is calculated using the characteristic diagram of FIG. 3 by the target air quantity calculation unit, and the calculation result is input to a target throttle opening calculation unit. In addition, the target throttle opening is calculated using the characteristic diagram of the lower drawing of FIG. 3 by the target air quantity calculation unit, and the calculation result is used as the target throttle opening TRGTVO to issue a command to the throttle 5 to be opened or closed. Next, the intake air quantity QA and the engine speed NE obtained using the air flow sensor 3 are input to a target AF calculation unit. Herein, the target AF TRGAF is calculated using the characteristic diagram of FIG. 4. The target AF TRGAF is converted into the total fuel injection quantity QFall using the following equation.

$$QFall = QA/TRGAF$$

The total fuel injection quantity QFall and the engine speed NE are input to a target EGR rate calculation unit. The target EGR rate TRGEGR is calculated using the characteristic diagram of FIG. 5 by the target EGR rate calculation unit. The calculation result is used as the target EGR rate TRGEGR and input to a target EGR valve opening calculation unit. In addition, the target EGR valve opening TRGETVO is calculated using the characteristic diagram of the lower drawing of FIG. 5 by the target EGR rate calculation unit. The calculation result is given as a command to the EGR valve 26 to be opened or closed.

FIG. 9 is a logic diagram illustrating a relation of inputs and outputs to set the injection pulse width in the intake stroke and the injection pulse width in the compression stroke with respect to the target EGR valve opening TRGETVO according to this embodiment. An EGR valve opening TRGETVO is input to an injection ratio calculation unit. An injection ratio IRin in the intake stroke and the injection ratio IRco in the compression stroke are calculated using the characteristic diagram of FIG. 6 by the injection ratio calculation unit. The calculation result and the fuel injection pressure FP are input to an injection pulse width calculation unit. The injection pulse width IPin in the intake stroke and the injection pulse width IPco in the compression stroke are calculated using the characteristic diagram of FIG. 7 by the injection pulse width calculation unit. The injector 7 is driven on the basis of the calculation result.

FIG. 10 illustrates an example of the result of a fuel injection control on the basis of the target EGR valve opening according to this embodiment. As illustrated in FIG. 5, when the target EGR valve opening TRGETVO is increased in a stepped manner as the target EGR rate TRGEGR is increased, the recirculation quantity passing through the exhaust recirculation pipe 28, the EGR valve 26, and the EGR cooler 27 and flowing into the combustion chamber 17 is increased, and a recirculation rate is increased in order to hold the intake air quantity passing through the intake pipe 11 and the throttle 6. Accordingly, the injection ratio IRin in the intake stroke in the injection ratio IR is reduced, and the injection ratio IRco in the compression stroke is increased in synchronization therewith. As a result, it is possible to suppress reduction in the intake air, the recirculation gas, and fluid energy of the air mixture of the fuel in the combustion chamber 19 at the ignition time point due to the increase of the injection ratio in the compression stroke, and thus the combustion at the time of the EGR increase can occur at a high speed.

Preferably, the total injection quantity in one stroke is set to a total sum of the injection pulse widths of the signals in plural times of injection. The injection ratio in the compression stroke is set to a total sum of the injection pulse widths of the injection signals in the compression stroke with respect to the total sum of the injection pulse widths of the injection signals. In a case where deviation information such as an individual difference of the injector 7 is stored in the ECU 1 in advance, the individual difference can be taken into consideration at the time of calculating the injection pulse width using the ratio of the injection pulse width, so that the injection quantity can be elaborately controlled for each cylinder or every injection control.

FIG. 11 is a flowchart illustrating a control content in the ECU 1 according to this embodiment. The control content illustrated in FIG. 11 is repeatedly performed in a predetermined period by the ECU 1. In the ECU 1, the accelerator pedal opening APO, the engine speed NE, and the values written in the ROM in the ECU 1 are read out in Step S101. Next, in Step S102, the target engine torque TRGTRQ with respect to the engine 100 is calculated. Next, in Step S103, the target intake air quantity TRGQA is calculated on the basis of the calculation result of Step S102. Next, in S104, the target throttle opening TRGTVO is calculated on the basis of the calculation result of Step S103, and the throttle 5 is controlled. Next, in S105, the intake air quantity QA is read out using the signal of the air flow sensor 3 after the throttle is controlled in Step S104. Next, in S106, the target A/F TRGAF is calculates on the basis of the intake air quantity QA obtained in Step S105. Next, in S107, the total fuel injection quantity QFall is calculated on the basis of the calculation result in Step S106. Next, in S108, the target EGR rate TRGEGR is calculated on the basis of the calculation result in Step S107. Next, in S109, the target EGR valve opening TRGETVO is calculated on the basis of the calculation result in Step S108. Next, in S110, the injection ratio IRin in the intake stroke and the injection ratio IRco in the compression stroke are calculated on the basis of the calculation result in Step S109. Next, in S111, an injection quantity QFin in the intake stroke and an injection quantity QFco in the compression stroke are calculated on the basis of the calculation result in Step S110. Next, the fuel injection pressure FP is read out in S112. Next, in S113, the injection pulse width IPin in the intake stroke and the injection pulse width IPco in the compression stroke are calculated on the basis of the calculation result in Step S112, and the injector 7 is controlled. The above flow is performed by the ECU 1 in a predetermined period.

According to the engine control device of the first embodiment, even in a case where the EGR rate is increased, it is possible to provide the engine control device which can suppress a reduction in the combustion speed. Then, the injection ratio in the compression stroke is increased with respect to the total injection quantity in one stroke according to an increase of the exhaust circulation rate. Therefore, it is possible to increase the combustion at the time of increasing the exhaust recirculation rate, and to suppress soot. Furthermore, the effect of suppressing the abnormal combustion and the effect of reducing the pump loss by increasing the exhaust recirculation rate still more can be increased.

Second embodiment

Next, a second embodiment will be described. In this embodiment, a control to increase the number of times of spilt injection is performed at the time of increasing the EGR in addition to the control described in the first embodiment. In the following, the configuration and control common in the first embodiment will be omitted, and the description will be given focusing on different points from those of the first embodiment.

FIG. 12 is a characteristic diagram illustrating a relation of the number of times in the intake stroke and the compression stroke with respect to the injection ratio in the intake stroke and the compression stroke with respect to the target EGR valve opening and the target EGR valve opening TRGETVO according to this embodiment. The upper drawing of FIG. 12 is the same as that described in FIG. 6. In addition, the vertical axis of the lower drawing of FIG. 12 indicates the number of times of injection in the intake stroke and the number of times of injection in the compression stroke. When the target EGR valve opening TRGETVO is increased, the number of times Nco of injection in the compression stroke is increased, and accordingly a total sum Nall of the number of times of injection in the intake stroke and the number of times of injection in the number of times of injection in the compression stroke is increased. Herein, the characteristic of the number of times of injection is not limited to this example, a slope of the number of times Nco of injection in the compression stroke may be different from a slope of the total sum Nall of the number of times of injection in the intake stroke and the number of times of injection in the compression stroke.

In addition, FIG. 13 is a logic diagram illustrating a relation of inputs and outputs to set the injection pulse width in the intake stroke and the injection pulse width in the compression stroke with respect to the target EGR valve opening TRGETVO according to this embodiment. In the injection ratio calculation unit, the number of times Nco of injection in the compression stroke and a total number of times Nall of injection are calculated using the characteristic diagram of FIG. 12 in addition to the injection ratio IRin in the intake stroke and the injection ratio IRco in the compression stroke.

In addition, as illustrated in FIG. 14, when the target EGR valve opening TRGETVO is increased in a stepped manner, the number of times IRco of injection in the compression stroke in the number of times N of injection is increased. Therefore, the increase of the injection pulse width IPco in the compression stroke corresponding to the increase of the injection ratio IRco in the compression stroke can be realized by the injection pulse width IPco(n) obtained by dividing the injection pulse width IPco in the compression stroke by the number of times Nco of injection in the compression stroke as illustrated by a dotted line. As a result, a traveling distance of the injection fuel from the injector 7 is shortened since the number of times of injection is increased. Even in a situation that a distance between the injector 7 and the piston 13 is short at the time of the compression stroke, it is possible to suppress that the fuel comes in contact with the piston 13 or attached thereto. It is possible to suppress that soot is generated. The increase of the injection ratio in the compression stroke and the increase of the number of times of injection in the compression stroke may be used independently because the operations and effects are different, and also a synergy effect can be obtained by implementing both controls.

In addition, FIG. 15 is a flowchart illustrating the control content in the ECU 1 according to this embodiment. A different point from the first embodiment is that the number of times Nin of injection in the intake stroke and the number of times Nco of injection in the compression stroke are calculated in S310 in addition to the calculation of the injection ratio IRin in the intake stroke and the injection ratio IRco in the compression stroke.

Third embodiment

Next, a third embodiment will be described using FIGS. 12 to 25.

FIG. 16 is a characteristic diagram illustrating a signal of the intra-cylinder pressure sensor and a pressure vibration intensity generated by an engine control device according to the third embodiment. The vertical axis of the upper drawing indicates a signal SIGCA of the crank angle sensor. Herein, an intra-cylinder pressure signal SIGP is read at a detection start timing Sp(i) of the intra-cylinder pressure sensor predetermined in the ECU 1, and a power spectrum PSP(i) is calculated. Herein, the suffix "i" indicates a cylinder number of the engine 100. In addition, the power spectrum PSP (i) until a detection end timing Fp(i) of the intra-cylinder pressure sensor predetermined in the ECU 1 is calculated. The power spectrum PSP(i) calculated during a period from the detection start timing Sp(i) to the detection end timing Fp(i) is integrated, and calculated as a pressure vibration intensity PKI(i). Herein, if an abnormal combustion (for example, a pressure vibration called knocking) is generated in the engine 100, a pressure vibration waveform in the intra-cylinder pressure signal SIGP is amplified, and the pressure vibration intensity PKI(i) is increased.

FIG. 17 is a characteristic diagram illustrating a characteristic of the ion current sensor and a characteristic of the EGR flow rate QEGR and a nitrogen oxide concentration with respect to an ion integration value. The vertical axis of the upper drawing of FIG. 17 indicates an ion current sensor signal SIGION, and the horizontal axis indicates time. The ion current sensor signal SIGION outputs an amplitude signal as illustrated from the intake stroke to the exhaust stroke in the drawing. The output illustrated in the drawing is given as a merely exemplary, and the output may be changed according to the operation state in the engine 100. Herein, a value obtained by integrating the ion current sensor signal SIGION from the compression stroke to the expansion stroke is defined as an ion intensity II. The ion intensity II is calculated in the ECU 1.

The vertical axis of the lower drawing of FIG. 17 indicates the EGR flow rate QEGR and the nitrogen oxide concentration, and the horizontal axis indicates the ion intensity II. The nitrogen oxide concentration is increased as the ion intensity II is increased. This is because the nitrogen oxide ions generated by thermal deviation of nitrogen in the air when the temperature is increased by a chemical reaction in the combustion chamber 17 are detected by the ion current sensor 21. When the EGR flow rate QEGR is reduced, the specific heat and the heat capacity of the combustible air mixture in the combustion chamber 17 becomes small, and thus the temperature is increased. Therefore, the nitrogen oxide concentration is increased, and the ion intensity II is increased. In addition, when the EGR flow rate QEGR is increased, the specific heat and the heat capacity of the combustible air mixture in the combustion chamber 17 become large, and thus the temperature is lowered. Therefore, the nitrogen oxide concentration is reduced, and the ion intensity II is reduced. In other words, the EGR flow rate QEGR can be detected according to the increase/decrease of the ion intensity II.

FIG. 18 is a characteristic diagram illustrating signals of the knock sensor and the vibration intensity according to this embodiment. The vertical axis of the upper drawing indicates a signal SIGCA of the crank angle sensor. Herein, a knock signal SIGP is read at a detection start timing Sk(i) of the knock sensor predetermined in the ECU 1, and a power spectrum PS (i) is calculated. Herein, the suffix "i" indicates a cylinder number of the engine 100. In addition, the power spectrum PS(i) until a detection end timing Fk(i) of the knock sensor predetermined in the ECU 1 is calculated. The power spectrum PS(i) calculated during a period from the detection start timing Sk(i) to the detection end timing Fk(i) is integrated, and calculated as a vibration intensity KI(i). Herein, if an abnormal combustion (for example, a pressure vibration called knocking) is generated in the engine 100, a vibration waveform in a knock sensor signal SIGKS is amplified, and the vibration intensity KI(i) is increased.

FIG. 19 is a characteristic diagram illustrating a signal of the intra-cylinder pressure sensor and a volume of a combustion chamber according to this embodiment. The vertical axis is the signal SIGP of the intra-cylinder pressure sensor. Herein, a relation with respect to a capacity V of the combustion chamber 17 predetermined in the ECU 1 is illustrated. A pump work PMEP in the drawing corresponds to a work from the exhaust stroke to the intake stroke of the engine 100. The pump work PMEP is calculated in the ECU 1 as a work before the intra-cylinder pressure in the exhaust stroke and the intra-cylinder pressure in the compression stroke. In addition, the calculation of the pump work PMEP is not limited to the above example, and a value obtained by multiplying and integrating only the intra-cylinder pressure signal in the intake stroke or the intra-cylinder pressure signal and the volume of the combustion chamber from the exhaust stroke may be used.

FIG. 20 is a characteristic diagram illustrating a signal of the crank angle sensor and the rotation speed according to this embodiment. The vertical axis of the upper drawing indicates a signal SIGCA of the crank angle sensor. Herein, a clock T1 in the ECU 1 is read at a detection start timing Sc (i) of the crank angle sensor predetermined in the ECU 1. Herein, the suffix "i" indicates a cylinder number of the engine 100. In addition, a clock T2 in the ECU 1 is read at a detection end timing Fc(i) of the crank angle sensor predetermined in the ECU 1. Herein, a detection time W(i) is calculated from a differential value between the inner clocks T1 and T2. In addition, a differential value between the detection start timing Sc(i) and the detection end timing Fc(i) becomes a detection crank angle $\Delta$CA in the detection time W(i). The rotation speed $\omega$(i) is calculated using the following equation.

$$\omega(i) = \Delta CA/W(i)$$

The rotation speed $\omega$(i) is calculated for every cylinder number "i", and a standard deviation is calculated for every cylinder and stored in the ECU 1 as a rotational variation $\sigma\omega$(i) . The rotational variation $\sigma\omega$(i) is used as an equivalent to the combustion variation of the subject cylinder. In other words, an increase of the rotational variation $\sigma\omega$(i) indicates that the combustion variation of the subject cylinder is increased.

FIG. 21 is a characteristic diagram of an operation region according to this embodiment. The vertical axis is the intake air quantity QA, and the horizontal axis is the engine speed NE. As illustrated in the drawing, the regions of a high load H and a low load L are predetermined in the ECU 1, and the boundary therebetween is assigned as an intake air quantity limit LIMQA. Herein, the determination on the regions is not limited only to the intake air quantity QA and the engine speed NE, and the intake air quantity QA may be set to the target throttle opening TRGTVO, the target intake air quantity TRGQA, or the target engine torque TRGTRQ.

FIG. 22 is a characteristic diagram illustrating the ignition timing according to this embodiment. The vertical axis indicates the total fuel injection quantity QFall, and the horizontal axis indicates the target EGR valve opening TRGETVO. As illustrated in the drawing, the ECU 1 is set in advance such that the ignition timing ADV is lagged in accordance with the reduction of the target EGR valve opening TRGETVO when the total fuel injection quantity QFall is increased, and the ignition timing ADV is advanced in accordance with the increase of the target EGR valve opening TRGETVO when the total fuel injection quantity QFall is reduced.

FIG. 23 is a characteristic diagram illustrating an intensity limit which is set in a high load H condition according to this embodiment. The vertical axis indicates an intensity limit LIMINT, and the horizontal axis indicates the total fuel injection quantity QFall. The ECU 1 is set in advance such that the intensity limit LIMINT is reduced in accordance with the increase of the total fuel injection quantity QFall. However, the setting of the intensity limit LIMINT is not limited to the above example. The strength limit may be set constant with respect to the increase of the total fuel injection quantity QFall.

FIG. 24 is a characteristic diagram illustrating a correction quantity of the injection ratio and a correction quantity of the ignition timing advance in the high load H condition according to this embodiment. The vertical axis of the upper drawing of FIG. 24 indicates the correction quantity of the injection ratio, and any one or more among the pressure vibration intensity PKI, the ion intensity II, and the vibration intensity KI are used in the horizontal axis. Herein, the pressure vibration intensity PKI will be described as an example. When the pressure vibration intensity PKI is increased, and is equal to or more than the intensity limit LIMINT, a correction quantity ΔIRco of the injection ratio in the compression stroke is increased, and a correction quantity ΔIRin of the injection ratio in the intake stroke is reduced. Therefore, when the pressure vibration intensity PKI indicates an abnormal combustion state, the correction quantity ΔIRco of the injection ratio in the compression stroke can be increased, a cooling effect is obtained in the combustion chamber 17. Further, since fuel spray can be disposed near the ignition plug 19, a laminar combustion speed is improved, so that the fluid energy of the air mixture in the combustion chamber 17 at the ignition time point is increased. Therefore, a turbulent combustion speed is improved. With one or more among these effects, it is possible to suppress an abnormal combustion.

The vertical axis of the lower drawing of FIG. 24 indicates the correction quantity of the ignition timing advance, and any one of more among the pressure vibration intensity PKI, the ion intensity II, and the vibration intensity KI are used in the horizontal axis. When the pressure vibration intensity PKI is increased, and is equal to or more than the above intensity limit LIMINT, the correction quantity ΔIRco of the injection ratio in the compression stroke is increased, and the advance quantity ΔADV of the ignition timing is increased in synchronization with the reduction of the correction quantity ΔIRin of the injection ratio in the intake stroke. This indicates that the ignition timing is corrected to be advanced according to the effect of suppressing the abnormal combustion achieved by a cooling effect in the combustion chamber 17 which is obtained by changing the correction quantity of the injection ratio, an improvement effect of the laminar combustion speed which is obtained by enabling the fuel spray to be disposed near the ignition plug 19, and an improvement effect of the turbulent combustion speed by increasing the fluid energy of the air mixture in the combustion chamber 17 at the ignition time point.

FIG. 25 is a characteristic diagram illustrating a characteristic of a pump work limit which is set in a low load L condition and a characteristic of a correction quantity of the EGR valve opening with respect to the pump work according to this embodiment. The vertical axis of the upper drawing of FIG. 25 indicates a pump work limit LIMPMEP, and the horizontal axis indicates the target EGR rate TRGEGR. The pump work limit LIMPMEP is preset in the ECU 1 to be decreased according to an increase of the target EGR rate TRGEGR. The increase of the target EGR rate TRGEGR causes the target EGR valve opening TRGETVO to increase, and an actual recirculation quantity is increased. When the recirculation rate is increased, the pump work PMEP in FIG. 19 is reduced, and thermal efficiency of the engine is improved, so that fuel efficiency is improved. Therefore, a mechanism to improve fuel efficiency is used.

The vertical axis of the lower drawing of FIG. 25 indicates a correction quantity ΔETVOO of the EGR valve opening, and the horizontal axis indicates the pump work PMEP. When the pump work PMEP is equal to or more than the pump work limit LIMPMEP, the correction quantity ΔETVOO of the EGR valve opening is increased. Therefore, the EGR valve opening can be corrected not to cause the pump work PMEP illustrated in FIG. 19 to exceed a predetermined amount, and the thermal efficiency of the engine 100 can be improved since the pump work PMEP can be minimized.

FIG. 26 is a characteristic diagram illustrating a characteristic of a rotational variation limit which is set in the low load L condition and a characteristic of the correction quantity of the EGR valve closing with respect to the rotational variation according to this embodiment. The vertical axis of the upper drawing of FIG. 26 indicates a rotational variation limit LIMσω, and the horizontal axis indicates the target EGR rate TRGEGR. The ECU 1 is set in advance such that the rotational variation limit LIMσω is reduced as the target EGR rate TRGEGR is increased. The setting of the rotational variation limit LIMσω is not limited to the above example. The rotational variation limit may be set constant with respect to the increase of the target EGR rate TRGEGR. The reason is to consider a characteristic that the combustion state becomes easy to be unstable as the target EGR rate TRGEGR is increased. The amount of the air mixture flowing into the combustion chamber 17 is increased as the target EGR rate TRGEGR (that is, the recirculation rate) is increased, and the amplitude of the rotation speed of the crank shaft 14 becomes large. Therefore, a variation of the rotational variation σω becomes small relatively. Therefore, it is possible to estimate the degradation of the combustion state with accuracy by keeping the rotational variation limit LIMσω small or constant.

The vertical axis of the low drawing of FIG. 26 indicates a correction quantity ΔETVOC of the EGR valve closing, and the horizontal axis indicates the rotational variation σω. When the rotational variation σω is equal to or more than the rotational variation limit LIMσω, the correction quantity ΔETVOC of the EGR valve closing is increased. In other words, the degradation of the combustion state according to the increase of the recirculation rate is expressed as a variation in indicated work IMEP (that is, an indicated work variation σIMEP). The result appears as the rotational variation σω of the crank shaft 14. The variation in the indicated work IMEP is suppressed by correcting the target EGR valve opening TRGETVO in a closing direction in order not to make the rotational variation σω exceed the rotational variation limit LIMσω. Therefore, it is possible to improve a combustion stability. Therefore, the EGR valve opening can be corrected to make the indicated work IMEP illustrated in FIG. 19 converge to a predetermined value, and the thermal efficiency of the engine 100 can be improved in performance. A pressure-volume diagram illustrated in FIG. 19 can be optimized by an EGR valve opening correction control based on the pump work PMEP using the intra-cylinder pressure sensor 21, and by an EGR valve closing correction control based on the indicated work IMEP using the crank angle sensor 15. Further, the crank angle sensor 15 is replaceable with the ion current sensor 21, the intra-cylinder pressure sensor 21, or the knock sensor 16.

FIG. 27 is a diagram illustrating an example of the result of the fuel injection and the ignition timing control on the basis of the target EGR valve opening in the high load H condition according to this embodiment. First, the injection pulse width IPco in the compression stroke and the injection pulse width IPin in the intake stroke are controlled with respect to an increase of the target EGR valve opening TRGETVO in the drawing in accordance with the characteristic diagram of FIG. 7. Next, when the intake air quantity QA is equal to or more than the intake air quantity limit LIMQA, it is determined that it is a region where an abnormal combustion such as knocking occurs. When the pressure vibration intensity PKI is equal to or more than the intensity limit LIMINT, it is determined that an abnormal combustion occurs.

The correction quantity ΔIRco of the injection ratio in the compression stroke is increased on the basis of the characteristic diagram of FIG. 24 based on the determination result, and the correction quantity ΔIRin of the injection ratio in the intake stroke is decreased to a negative value. Therefore, the injection pulse width IPco in the compression stroke is extended. An intra-cylinder cooling effect and a combustion speed improvement due to an increase of turbulent energy of the air mixture are obtained. Further, a stratified or weak stratified layer of the air mixture is formed in the center of the combustion chamber to perform an end gas part lean, so that the end gas knocking is suppressed. When the correction quantity ΔADV of the ignition timing advance is increased in accordance with the knocking suppression effect, the injection pulse width IPco in the compression stroke, the injection pulse width IPin in the intake stroke, and the ignition timing ADV in FIG. 27 are corrected. The pressure vibration intensity PKI is reduced. The efficiency of the engine 100 can be improved by advancing the ignition timing. Further, the fuel efficiency is increased. Herein, in a case where the intake air quantity QA is less that the intake air quantity limit LIMQA, the injection pulse width IPco in the compression stroke, the injection pulse width IPin in the intake stroke, and the ignition timing ADV are not corrected even when the pressure vibration intensity PKI is equal to or more than the intensity limit LIMINT.

FIG. 28 is a diagram illustrating an example of the result of the fuel injection and the ignition timing control on the basis of the target EGR valve opening in the low load L condition according to this embodiment. First, the injection pulse width IPco in the compression stroke and the injection pulse width IPin in the intake stroke are controlled with respect to an increase of the target EGR valve opening TRGETVO in the drawing in accordance with the characteristic diagram of FIG. 7. Next, in a case where the intake air quantity QA is less than the intake air quantity limit LIMQA, and the pump work PMEP is equal to or more than the pump work limit LIMPMEP, the correction quantity ΔETVOO of the EGR valve opening is increased in the characteristic diagram of FIG. 25 to correct the target EGR valve opening TRGETVO in FIG. 28 to be opened, and to reduce the pump work PMEP.

Further, in a case where the intake air quantity QA is less than the intake air quantity limit LIMQA, and the rotational variation σω becomes equal to or more than the rotational variation limit LIMσω, the correction quantity ΔETVOC of the EGR valve closing in the characteristic diagram of FIG. 26 is increased to correct the target EGR valve opening TRGETVO in FIG. 28 to be opened, and to reduce the rotational variation σω. The injection pulse width IPco in the compression stroke and the injection pulse width IPin in the intake stroke are changed according to the target EGR valve opening TRGETVO, and the ignition timing ADV is changed according to the total fuel injection quantity QFall and the target EGR valve opening TRGETVO illustrated in FIG. 22. Herein, in a case where the intake air quantity QA becomes equal to or more that the intake air quantity limit LIMQA, the target EGR valve opening TRGTEVO is not corrected even when the pump work PMEP becomes equal to or more than the pump work limit LIMPMEP, or the rotational variation σω becomes equal to or more than the rotational variation limit LIMσω.

FIG. 29 is a flowchart illustrating a control content of the ECU 1 according to this embodiment. The control content illustrated in FIG. 29 is repeatedly executed by the ECU 1 in a predetermined period. In Step S201, the ECU 1 reads the accelerator pedal opening APO, the engine speed NE, and the values written in the ROM in the ECU 1. Next, the target engine torque TRGTRQ with respect to the engine 100 is calculated in Step S202. Next, in Step S203, the target intake air quantity TRGQA is calculated on the basis of the calculation result in Step S202. Next, in S204, the target throttle opening TRGTVO is calculated on the basis of the calculation result in Step S203, and the throttle 5 is controlled. Next, in S205, the intake air quantity QA is read out using the signal of the air flow sensor 3 after controlling the throttle in Step S204.

Next, in S206, the intake air quantity QA obtained in Step S205 is compared to the intake air quantity limit LIMQA. In a case where the intake air quantity QA is equal to or more than the intake air quantity limit LIMQA, the procedure proceeds to Step S207. Next, in Step S207, the target AF TRGAF is calculated using the intake air quantity QA obtained in Step S205. Next, in Step S208, the total fuel injection quantity QFall is calculated using the target AF TRGAF obtained in Step S207. Next, in Step S209, the target EGR rate TRGEGR is calculated using the total fuel injection quantity QFall obtained in Step S208. Next, in Step S210, the target EGR valve opening EGRETVO is calculated using the target EGR rate TRGEGR obtained in Step S209, and the EGR valve 26 is controlled. Next, in Step S211, the injection ratio IRin in the intake stroke, the injection ratio IRco in the compression stroke, the number of times Nin of injection in the intake stroke, and the number of times Nco of injection in the compression stroke are calculated using the target EGR valve opening EGRETVO obtained in Step S210. Next, in Step S212, the injection quantity QFin in the intake stroke and the injection quantity QFco in the compression stroke are calculated using the calculation result obtained in Step S211. Next, in Step S213, the fuel injection pressure FP is read out. Next, in Step S214, the injection pulse width IPin in the intake stroke and the injection pulse width IPco in the compression stroke are calculated, and the injector 7 is controlled. Next, in Step S215, the ignition timing ADV is calculated, and the ignition coil 20 is controlled. Next, in Step S216, the pressure vibration intensity PKI, the ion intensity II, and the vibration intensity KI are calculated.

Next, in Step S217, it is determined whether the pressure vibration intensity PKI, the ion intensity II, and the vibration intensity KI are less than the intensity limit LIMINT. In a case where the pressure vibration intensity PKI, the ion intensity II, and the vibration intensity KI are less than the intensity limit LIMINT, the procedure proceeds to "YES" and this flow is repeatedly performed. In a case where the pressure vibration intensity PKI, the ion intensity II, and the vibration intensity KI are equal to or more than the intensity limit LIMINT, the procedure proceeds to Step S218. Next, in Step S218, the correction quantity ΔIRin of the injection ratio in the intake stroke and the correction quantity ΔIRco of the injection ratio in the compression stroke are calculated. Next, the calculation result in Step S218 is input to Step S211, and the calculation in Step S211 on the injection ratio IRin in the intake stroke and the injection ratio IRco in the compression stroke is corrected. In addition, the calculation result in Step S218 is input to Step S219, and the correction quantity ΔADV of the ignition timing advance is calculated in Step S219. Next, the calculation result in Step S219 is input to Step S215, and the calculation in Step S215 on the ignition timing ADV is corrected.

Next, in S206, the intake air quantity QA obtained in Step S205 is compared to the intake air quantity limit LIMQA, and in a case where the intake air quantity QA is less than the intake air quantity limit LIMQA, the procedure proceeds to Step S220. Next, in Step S220, the target AF TRGAF is calculated using the intake air quantity QA obtained in Step S205. Next, in Step S221, the total fuel injection quantity QFall is calculated using the target AF TRGAF obtained in Step S220. Next, in Step S222, the target EGR rate TRGEGR is calculated using the total fuel injection quantity QFall obtained in Step S221. Next, in Step S223, the target EGR valve opening EGRETVO is calculated using the target EGR rate TRGEGR obtained in Step S222, and the EGR valve 26 is controlled. Next, in Step S224, the pump work PMEP and the rotational variation σω are calculated.

Next, in Step S225, the pump work PMEP is compared to the pump work limit LIMPMEP. In a case where the pump work PMEP is equal to or more than the pump work limit LIMPMEP, the procedure proceeds to Step S226, and the correction quantity ΔETVOO of the EGR valve opening is calculated. The calculation result in Step S226 is input to Step S223, and the target EGR valve opening TRGETVO is corrected.

Next, in Step S227, the rotational variation σω is compared to the rotational variation limit LIMσω. In a case where the rotational variation σω is equal to or more than the rotational variation limit LIMσω, the procedure proceeds to Step S228, and the correction quantity ΔETVOC of the EGR valve closing is calculated. The calculation result in Step S228 is input to Step S223, and the target EGR valve opening TRGETVO is corrected.

Next, in Step S227, in a case where the rotational variation σω is less than the rotational variation limit LIMσω, the procedure proceeds to Step S229, and the injection ratio IRin in the intake stroke, the injection ratio IRco in the compression stroke, the number of times Nin of injection in the intake stroke Nin, and the number of times Nco of injection in the compression stroke are calculated using the target EGR valve opening EGRETVO corrected in Step S223. Next, in Step S230, the injection quantity QFin in the intake stroke and the injection quantity QFco in the compression stroke are calculated using the calculation result obtained in Step S229. Next, in Step S231, the fuel injection pressure FP is read out. Next, in Step S232, the injection pulse width IPin in the intake stroke and the injection pulse width IPco in the compression stroke are calculated, and the injector 7 is controlled. Next, in Step S233, the ignition timing ADV is calculated, the ignition coil 20 is controlled, and this flow is repeatedly performed. The above flow is performed by the ECU 1 in a predetermined period.

Fourth embodiment

Next, the third embodiment will be described using FIGS. 30 and 31.

FIG. 30 is a diagram illustrating an example of a fuel injection result on the basis of the EGR valve opening until the EGR valve is opened after the engine starts according to this embodiment. Herein, the vehicle speed is "0", and the position of the shift lever is an N range. The engine is shifted to a catalyst warming-up mode after starting, and the injection ratio is subjected to the injection control in the intake stroke and the compression stroke. Herein, the injection ratio and the number of times of injection in the catalyst warming-up mode are controlled on the basis of the exhaust temperature sensor 24. Preferably, the number of times of injection in the intake stroke and the number of times of injection in the compression stroke are equal, and are set to almost the same injection timing as the injection timing of the adjacent or facing cylinder. Next, the engine moves to an engine warming-up mode after the catalyst warming-up mode ends. Herein, the injection ratio and the number of times of injection in the engine warming-up mode are controlled on the basis of the cooling water temperature. Preferably, the injection control is performed only in the intake stroke, and the degradation in exhaust due to the attachment of the fuel to the combustion chamber when the engine is a cool condition is suppressed. Next, when the cooling water temperature exceeds an EGR allowable water temperature N, the engine warming-up mode is completed, and the target EGR valve opening is increased. At this time, the injection ratio in the compression stroke and the number of times of injection in the compression stroke in the engine warming-up mode are preferably increased.

FIG. 31 is a diagram illustrating an example of the fuel injection result on the basis of the EGR valve opening when a vehicle start request is issued during a period when the EGR valve is opened after the engine starts according to this embodiment. Herein, the vehicle speed is "0", and the position of the shift lever is shifted from the N range to the D range. The shift made to the catalyst warming-up mode immediately after the engine starts, and the injection ratio is controlled in the intake stroke and the compression stroke. Herein, in a case where the shift is made to the D range during the catalyst warming-up mode, the catalyst warming-up mode is completed and shifted to a low-temperature start request mode. In addition, the EGR allowable water temperature in the D range is preferably changed from the N range to the D range.

In the low-temperature start request mode, the number of times of injection is equal to that in the catalyst warming-up mode, and the injection ratio in the compression stroke is slightly decreased. Next, in a case where the cooling water temperature exceeds an EGR allowable water temperature D, the low-temperature start request mode is completed, and the target EGR valve opening is increased. At this time, the injection ratio in the compression stroke and the number of times of injection in the compression stroke in the low-temperature start request mode are preferably increased.

Since there is provided the EGR allowable water temperature control, the catalyst warming-up operation is not degraded and an exhaust purification performance is improved. Further, the injection ratio in the compression stroke is increased at the time of EGR allowable time. The turbulent energy of the air mixture can be fast increased to the fuel speed can be improved. In addition, it is possible to reduce the attachment of the fuel to the inner wall of the combustion chamber, and to reduce the generation of soot by increasing the number of times of inj ection in the compression stroke. Further, in a case where there is a start request in the D range, the mode is immediately changed from the catalyst warming-up mode to the low-temperature start request mode, and the EGR allowable water temperature D is set to be higher than the EGR allowable water temperature N, so that the catalyst can be slowly warmed up while drivability is improved. Then, since the EGR allowable water temperature D is set to be higher than the EGR allowable water temperature N, it is possible to suppress condensing caused by the recirculating gas in the exhaust recirculation pipe 28 and corrosion in the pipe at the time of the start request at a low temperature.

Further, the engine control device according to the invention is not limited to the respective embodiments, and the configuration can be appropriately changed within a scope not departing from the spirit thereof.

For example, the above embodiments have been described using the EGR unit of an external EGR system in which the exhaust gas discharged to the exhaust pipe is recirculated to the intake side using the exhaust recirculation pipe, but the invention is not limited thereto. The invention can be applied to the EGR unit of a so-called inner EGR system. In the EGR unit of the inner EGR system, the open/close timings of the exhaust valve and the intake valve are overlapped as illustrated in the upper drawing of FIG. 32 to make the exhaust gas left in the cylinder. In this way, in the case of the EGR unit of the inner EGR system, a target overlap TRGOL becomes large as a target inner EGR ratio TRGinEGR becomes high as illustrated in the drawing in the middle of FIG. 32. In other words, the injection ratios in the intake stroke and the compression stroke with respect to the target overlap are illustrated in the lower drawing of FIG. 32 such that the injection ratio IRin in the intake stroke is reduced, and the injection ratio IRco in the compression stroke is increased when the target overlap TRGOL is increased.

In addition, the description has been given about an example of a division injection system where the fuel is injected in a split manner, but the invention is not limited to the division injection system. The fuel may be continuously injected.

Reference Signs List

| | |
|---|---|
| 1 | ECU |
| 2 | accelerator pedal opening sensor |
| 3 | air flow sensor |
| 4 | intake air temperature/humidity sensor |
| 5 | throttle |
| 6 | tumble valve |
| 7 | injector |
| 8 | fuel pump |
| 9 | common rail |
| 10 | fuel pipe |
| 11 | intake pipe |
| 12 | variable intake/exhaust valve |
| 13 | piston |
| 14 | crank shaft |
| 15 | crank angle sensor |
| 16 | knock sensor |
| 17 | combustion chamber |
| 18 | cooling water temperature sensor |
| 19 | ignition plug |
| 20 | ignition coil |
| 21 | ion current sensor (intra-cylinder pressure sensor) |
| 22 | exhaust pipe |
| 23 | three-way catalyst |
| 24 | exhaust temperature sensor |
| 25 | air-fuel ratio sensor |
| 26 | EGR valve |
| 27 | EGR cooler |
| 28 | exhaust recirculation pipe |
| 29 | cooling water pump |
| 30 | cooling water path switching valve |
| 100 | engine |

## Claims

1. An engine control device that controls an engine, the engine including an injector to direct inject fuel into a cylinder, an ignition device to ignite the injected fuel, and an EGR unit that is capable of recycling fuel gas and changing an EGR rate of the recycled fuel gas, and issues a command to the injector to perform a plurality of times of injection during one cycle,
wherein a command is issued to perform at least any one of controls: a control that an injection quantity in a compression stroke is increased with respect to a total injection quantity during one cycle in a case where the EGR rate is high compared to a case where the EGR rate is small; and a control that the number of times of injection in the compression stroke is increased with respect to a total number of times of injection during one cycle in a case where the EGR rate is high compared to a case that the EGR rate is small.

2. An engine control device that controls an engine, the engine including an injector to direct inject fuel into a cylinder, an ignition device to ignite the injected fuel, and an EGR unit that is capable of recycling fuel gas and changing an EGR rate of the recycled fuel gas,
wherein a fuel injection ends at timing near an ignition timing of the ignition device in a case where the EGR rate is high compared to a case where the EGR rate is small.

3. The engine control device according to claim 1, wherein the EGR unit is configured by an external EGR device that includes an exhaust recirculation pipe connecting an exhaust pipe and an intake pipe, and an EGR valve that adjusts a flow rate of gas flowing in the exhaust recirculation pipe.

4. The engine control device according to claim 3, wherein the EGR unit adjusts the EGR rate on the basis of at least any one of an intake temperature sensor, a cooling water temperature sensor, and a lubricating oil temperature sensor, a unit that allows adjustment of a recirculation rate on the basis of a vehicle speed sensor or a shift lever position sensor, an accelerator pedal opening sensor, an air flow sensor, a crank angle sensor, or a rotation speed sensor.

5. The engine control device according to claim 1, wherein the total injection quantity is determined by an injection pulse width of an injection signal with respect to the injector, and an injection quantity in the compression stroke is determined by an injection pulse width of an injection signal in the compression stroke with respect to the injector.

6. The engine control device according to claim 1, wherein the total number of times of injection is determined by the number of injection pulses of an injection signal with respect to the injector, and the number of times of injection in the compression stroke is determined by the number of injection pulses of an injection signal in the compression stroke with respect to the injector.

7. The engine control device according to claim 1, comprising:

a combustion state detection device that detects a combustion state in a cylinder,
wherein the EGR rate is set to be high in a case where the combustion state is normal, and the EGR rate is set to be small in a case where the combustion state is degraded.

**8.** The engine control device according to claim 7, wherein the combustion state detection device is configured using an accelerator pedal opening sensor or an air flow sensor, and an intra-cylinder pressure sensor or a crank angle sensor.

**9.** The engine control device according to claim 7, wherein the combustion state detection device includes an accelerator pedal opening sensor or an air flow sensor, and any one or more among an intra-cylinder pressure sensor, an ion current sensor, and a knock sensor.

**10.** The engine control device according to claim 1, wherein the ignition device controls the ignition timing on the basis of a variation of the injection quantity in the compression stroke with respect to the total injection quantity or a variation of the number of times of injection in the compression stroke with respect to the total number of times of injection.

FIG. 1

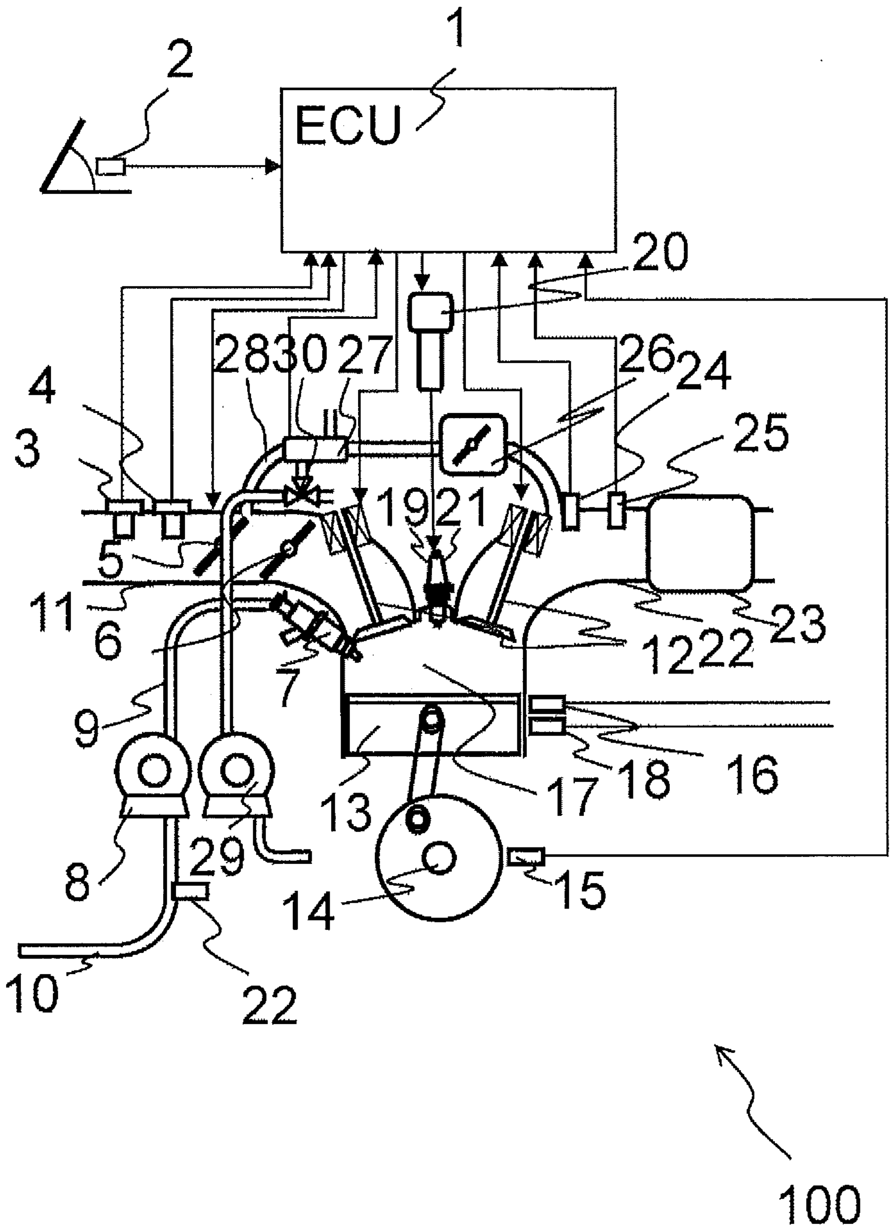
ECU
1
2
20
28
30
27
26
24
4
25
3
19
21
5
11
6
12
22
23
7
9
16
18
17
13
8
29
14
15
10
22
100

FIG. 2

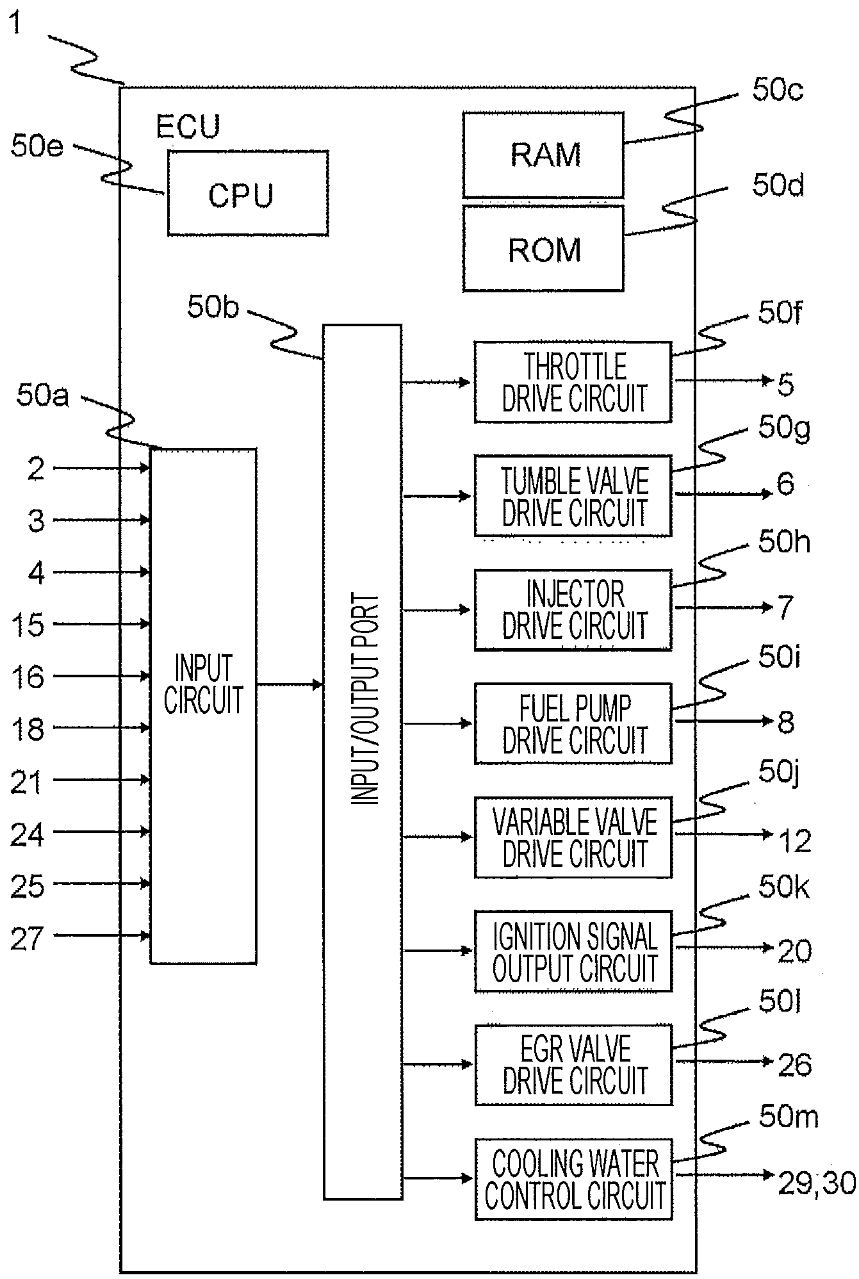
1
ECU
50e
CPU
RAM
50c
ROM
50d
50b
50a
INPUT CIRCUIT
INPUT/OUTPUT PORT
2
3
4
15
16
18
21
24
25
27
THROTTLE DRIVE CIRCUIT
50f
5
TUMBLE VALVE DRIVE CIRCUIT
50g
6
INJECTOR DRIVE CIRCUIT
50h
7
FUEL PUMP DRIVE CIRCUIT
50i
8
VARIABLE VALVE DRIVE CIRCUIT
50j
12
IGNITION SIGNAL OUTPUT CIRCUIT
50k
20
EGR VALVE DRIVE CIRCUIT
50l
26
COOLING WATER CONTROL CIRCUIT
50m
29,30

FIG. 3

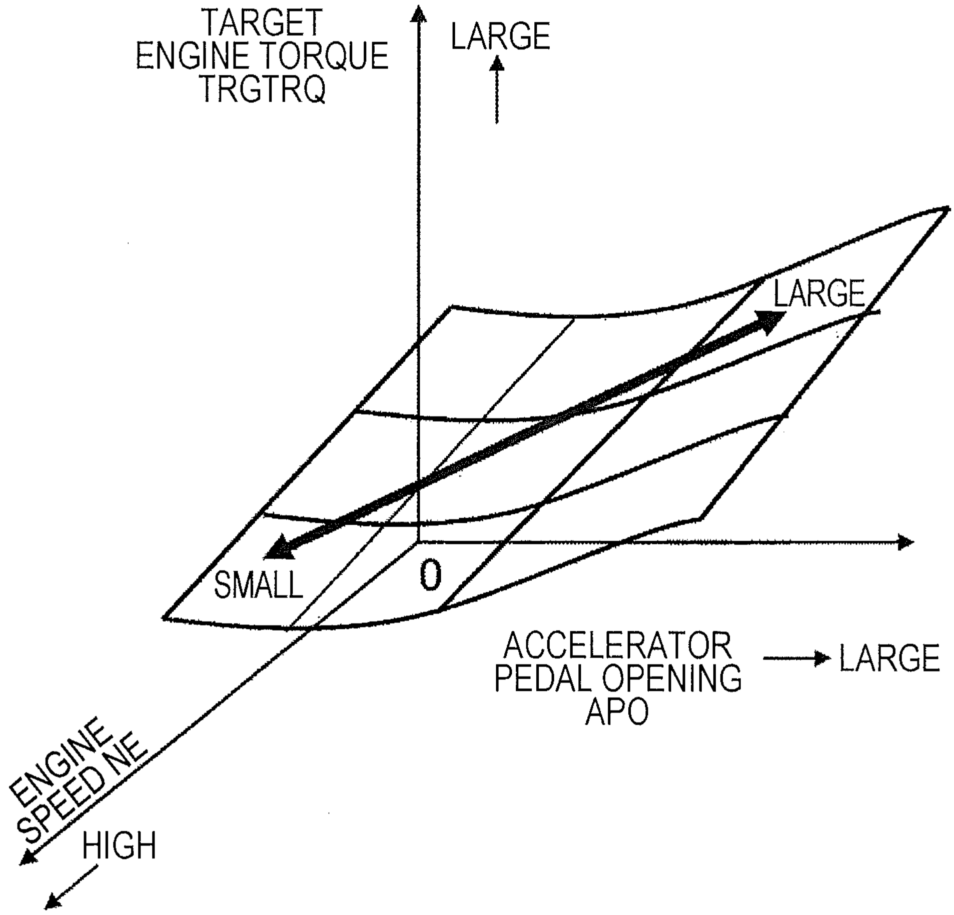
TARGET
ENGINE TORQUE
TRGTRQ
LARGE
LARGE
SMALL
0
ACCELERATOR
PEDAL OPENING
APO
LARGE
ENGINE
SPEED NE
HIGH

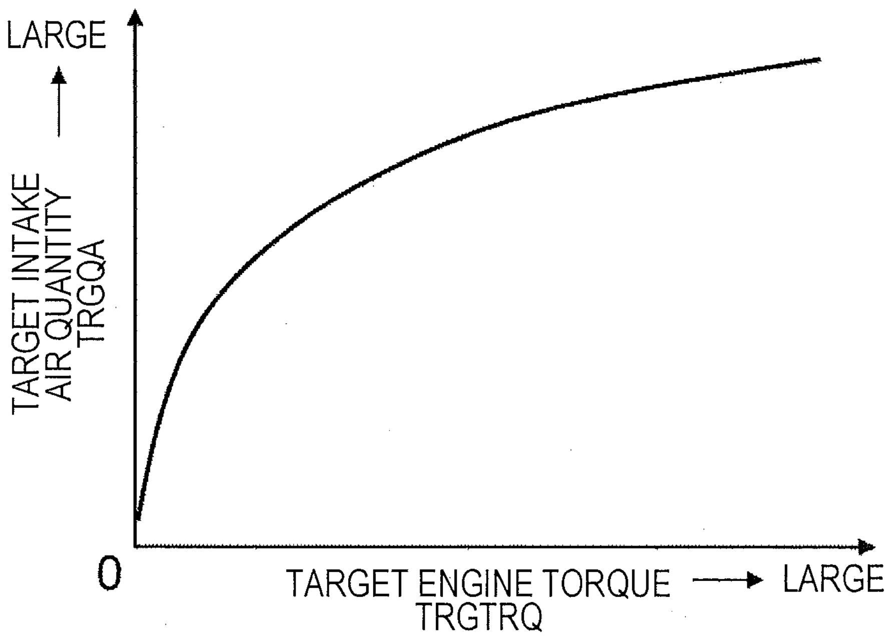
LARGE
TARGET INTAKE
AIR QUANTITY
TRGQA
0
TARGET ENGINE TORQUE
TRGTRQ
LARGE

FIG. 4

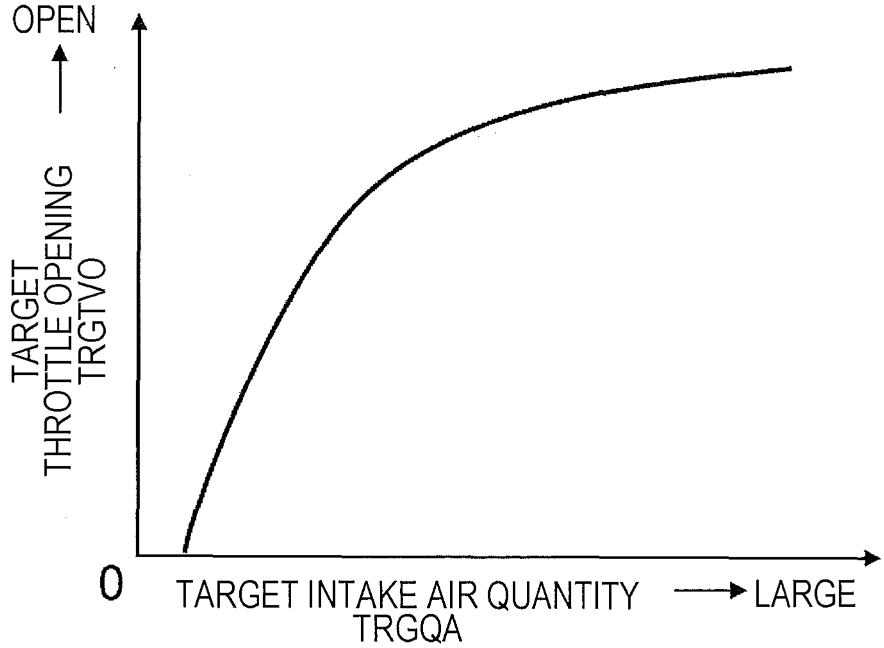
OPEN
TARGET THROTTLE OPENING TRGTVO
0
TARGET INTAKE AIR QUANTITY TRGQA
LARGE

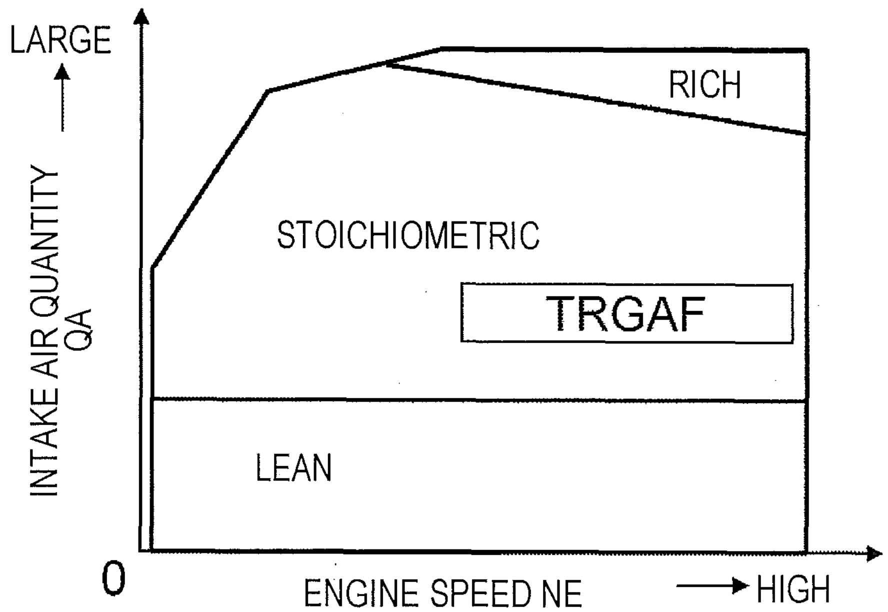
LARGE
INTAKE AIR QUANTITY QA
RICH
STOICHIOMETRIC
TRGAF
LEAN
0
ENGINE SPEED NE
HIGH

*FIG. 5*

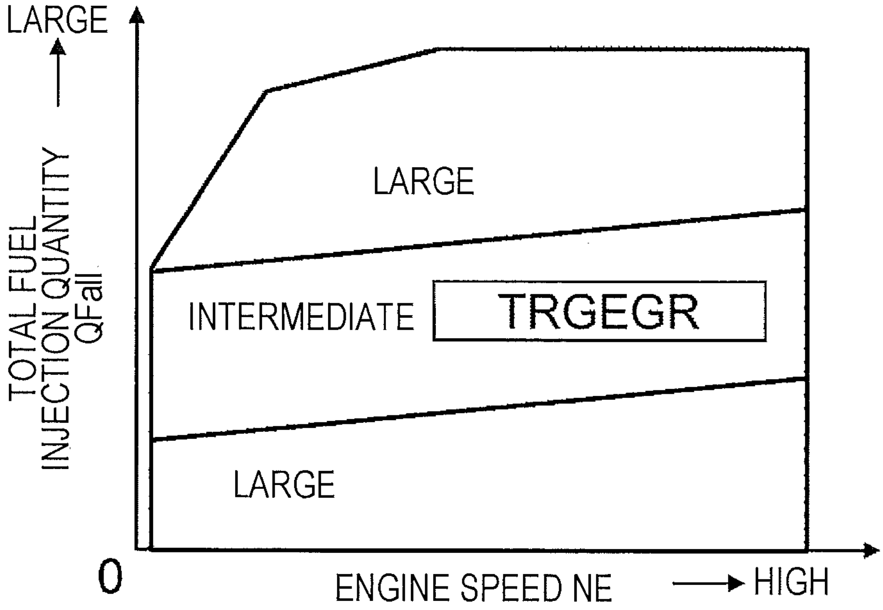
LARGE
TOTAL FUEL INJECTION QUANTITY QFall
LARGE
INTERMEDIATE
TRGEGR
LARGE
0
ENGINE SPEED NE
HIGH

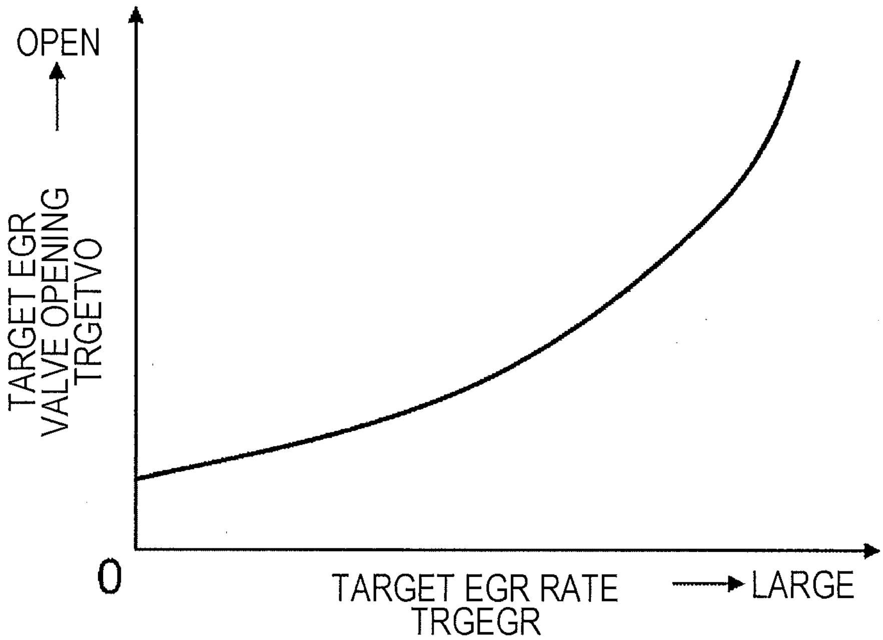
OPEN
TARGET EGR VALVE OPENING TRGETVO
0
TARGET EGR RATE TRGEGR
LARGE

FIG. 6

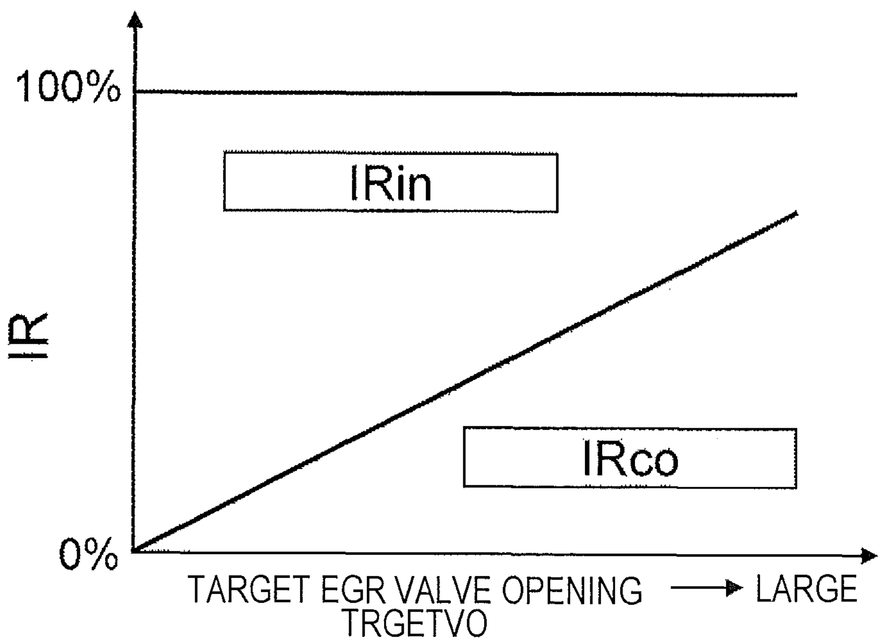

FIG. 7

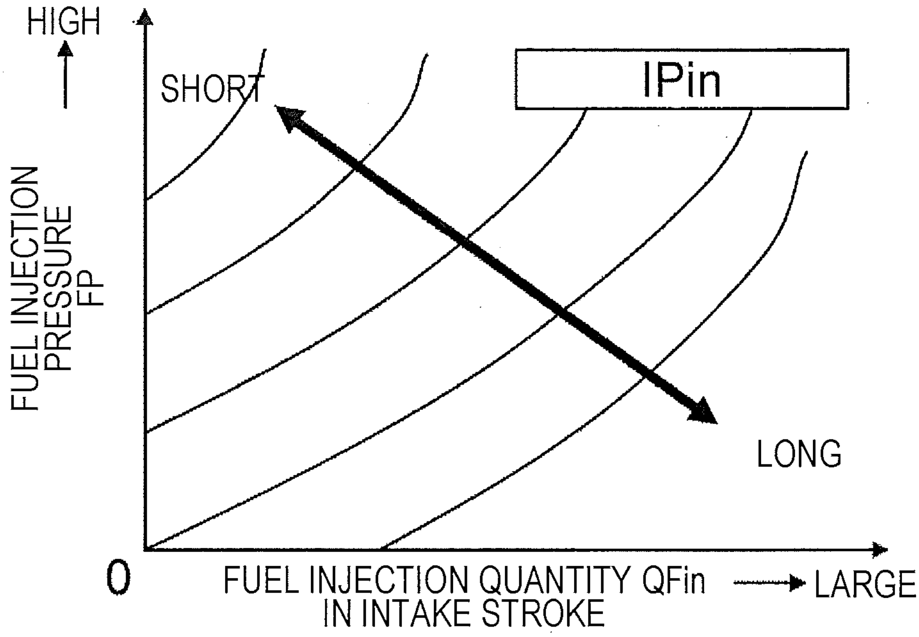
HIGH
FUEL INJECTION PRESSURE FP
SHORT
IPin
LONG
0
FUEL INJECTION QUANTITY QFin IN INTAKE STROKE
LARGE

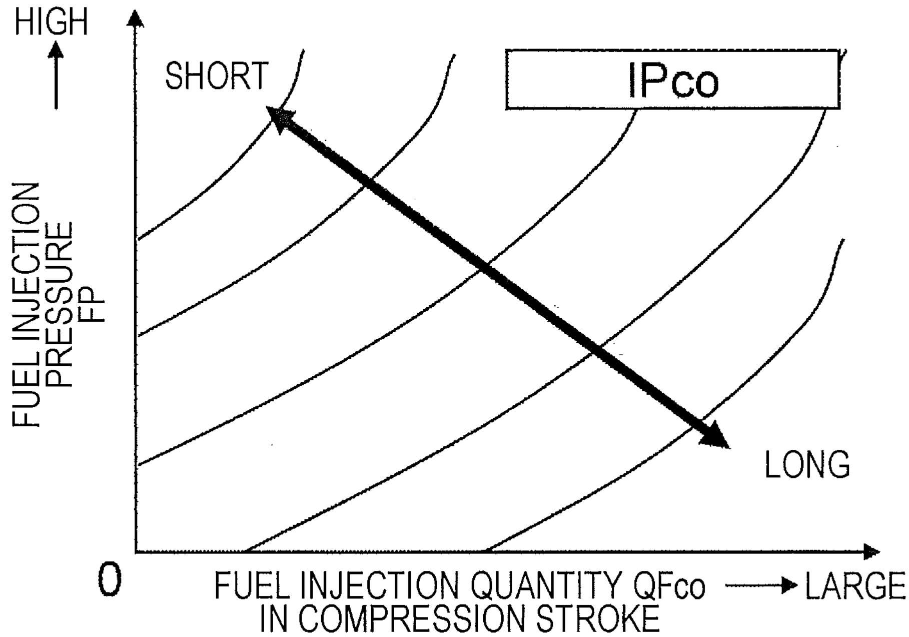
HIGH
FUEL INJECTION PRESSURE FP
SHORT
IPco
LONG
0
FUEL INJECTION QUANTITY QFco IN COMPRESSION STROKE
LARGE

FIG. 8

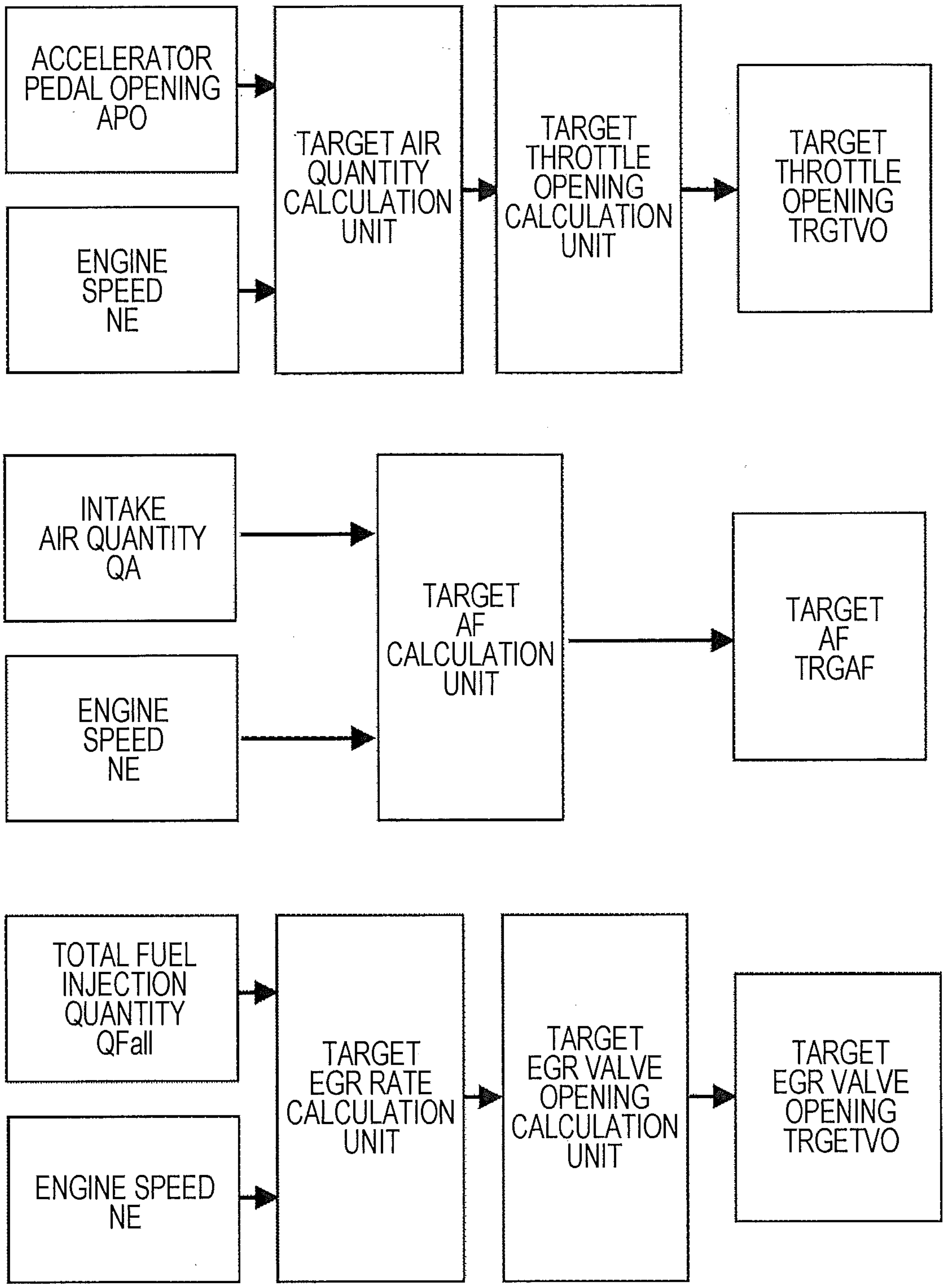
ACCELERATOR PEDAL OPENING APO
ENGINE SPEED NE
TARGET AIR QUANTITY CALCULATION UNIT
TARGET THROTTLE OPENING CALCULATION UNIT
TARGET THROTTLE OPENING TRGTVO
INTAKE AIR QUANTITY QA
ENGINE SPEED NE
TARGET AF CALCULATION UNIT
TARGET AF TRGAF
TOTAL FUEL INJECTION QUANTITY QFall
ENGINE SPEED NE
TARGET EGR RATE CALCULATION UNIT
TARGET EGR VALVE OPENING CALCULATION UNIT
TARGET EGR VALVE OPENING TRGETVO

FIG. 9

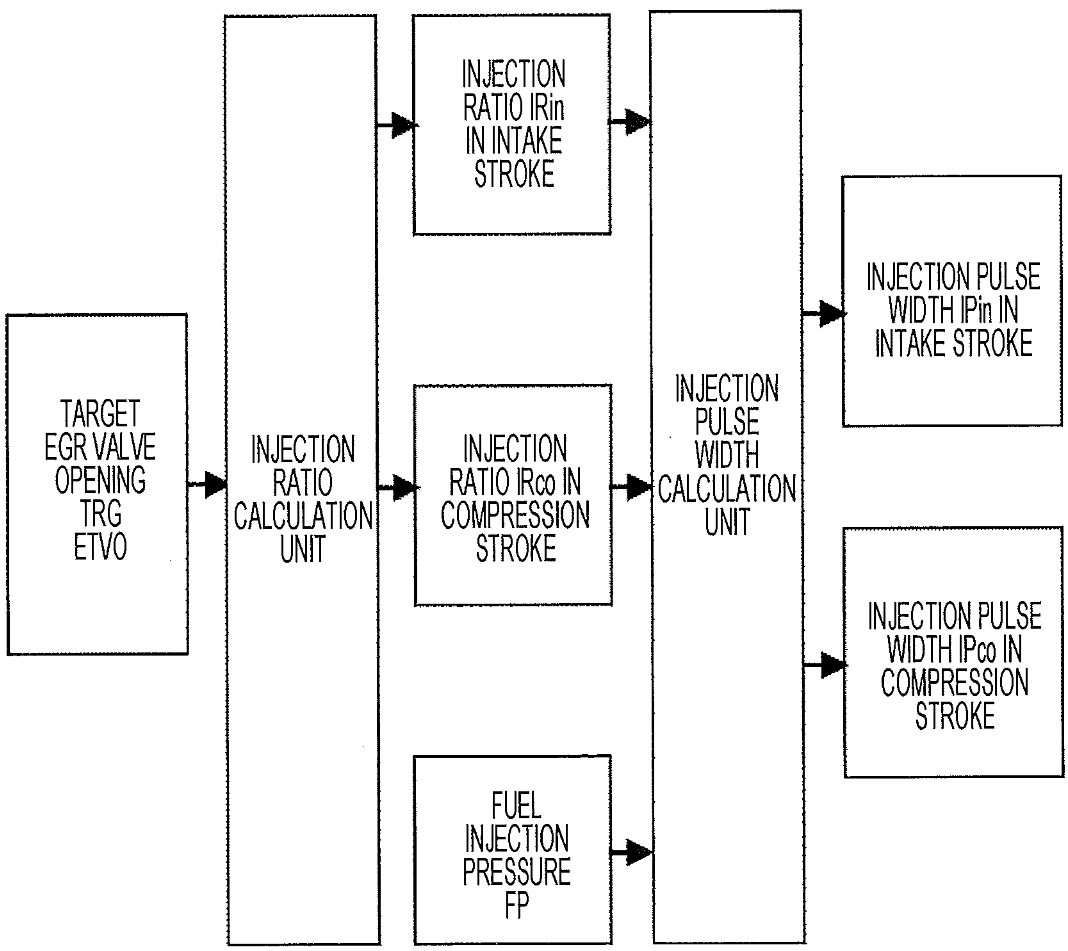
TARGET EGR VALVE OPENING TRG ETVO
INJECTION RATIO CALCULATION UNIT
INJECTION RATIO IRin IN INTAKE STROKE
INJECTION RATIO IRco IN COMPRESSION STROKE
FUEL INJECTION PRESSURE FP
INJECTION PULSE WIDTH CALCULATION UNIT
INJECTION PULSE WIDTH IPin IN INTAKE STROKE
INJECTION PULSE WIDTH IPco IN COMPRESSION STROKE

FIG. 10

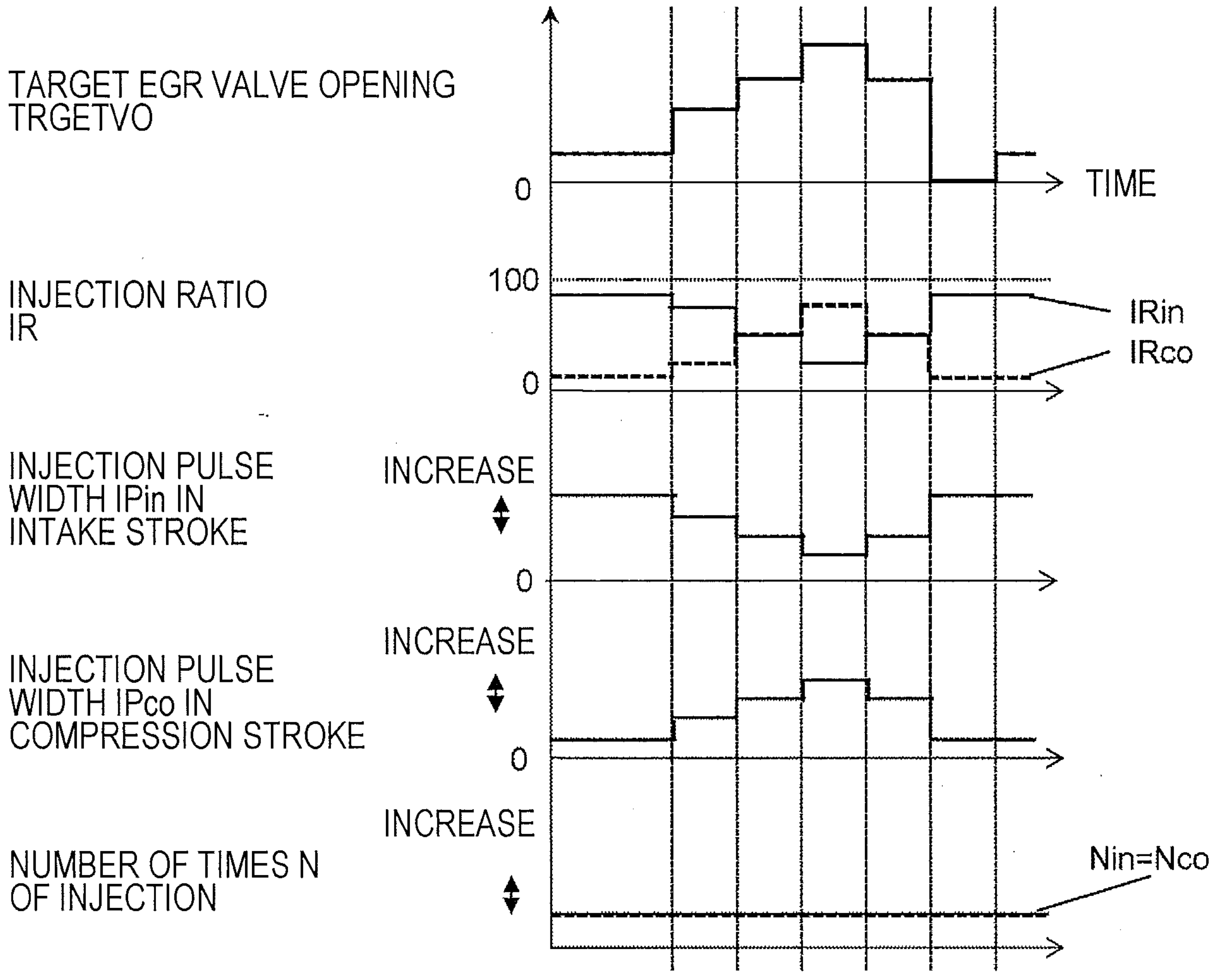
TARGET EGR VALVE OPENING TRGETVO
0
TIME
INJECTION RATIO IR
100
0
IRin
IRco
INJECTION PULSE WIDTH IPin IN INTAKE STROKE
INCREASE
0
INJECTION PULSE WIDTH IPco IN COMPRESSION STROKE
INCREASE
0
NUMBER OF TIMES N OF INJECTION
INCREASE
Nin=Nco

FIG. 11

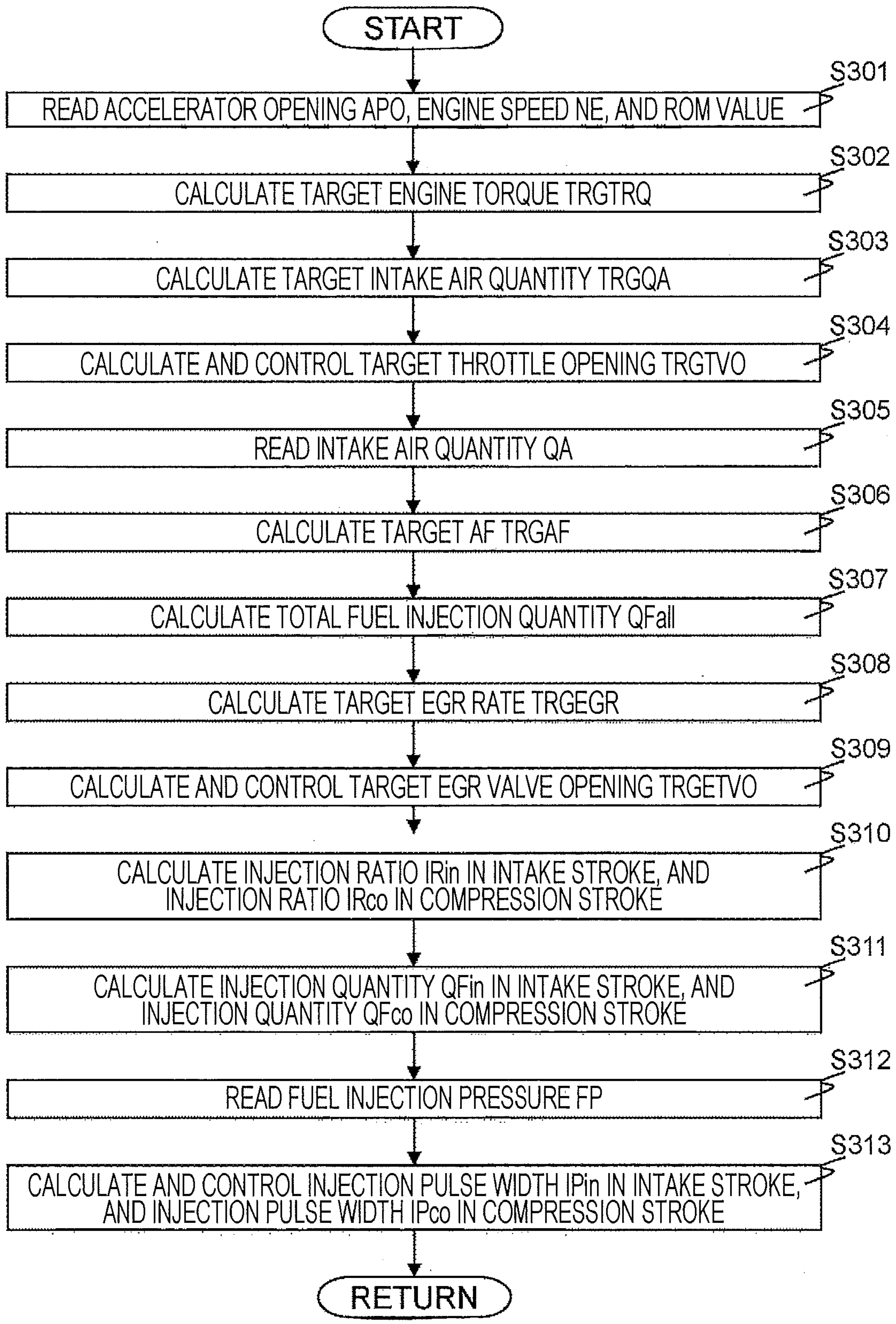
START
S301
READ ACCELERATOR OPENING APO, ENGINE SPEED NE, AND ROM VALUE
S302
CALCULATE TARGET ENGINE TORQUE TRGTRQ
S303
CALCULATE TARGET INTAKE AIR QUANTITY TRGQA
S304
CALCULATE AND CONTROL TARGET THROTTLE OPENING TRGTVO
S305
READ INTAKE AIR QUANTITY QA
S306
CALCULATE TARGET AF TRGAF
S307
CALCULATE TOTAL FUEL INJECTION QUANTITY QFall
S308
CALCULATE TARGET EGR RATE TRGEGR
S309
CALCULATE AND CONTROL TARGET EGR VALVE OPENING TRGETVO
S310
CALCULATE INJECTION RATIO IRin IN INTAKE STROKE, AND INJECTION RATIO IRco IN COMPRESSION STROKE
S311
CALCULATE INJECTION QUANTITY QFin IN INTAKE STROKE, AND INJECTION QUANTITY QFco IN COMPRESSION STROKE
S312
READ FUEL INJECTION PRESSURE FP
S313
CALCULATE AND CONTROL INJECTION PULSE WIDTH IPin IN INTAKE STROKE, AND INJECTION PULSE WIDTH IPco IN COMPRESSION STROKE
RETURN

FIG. 12

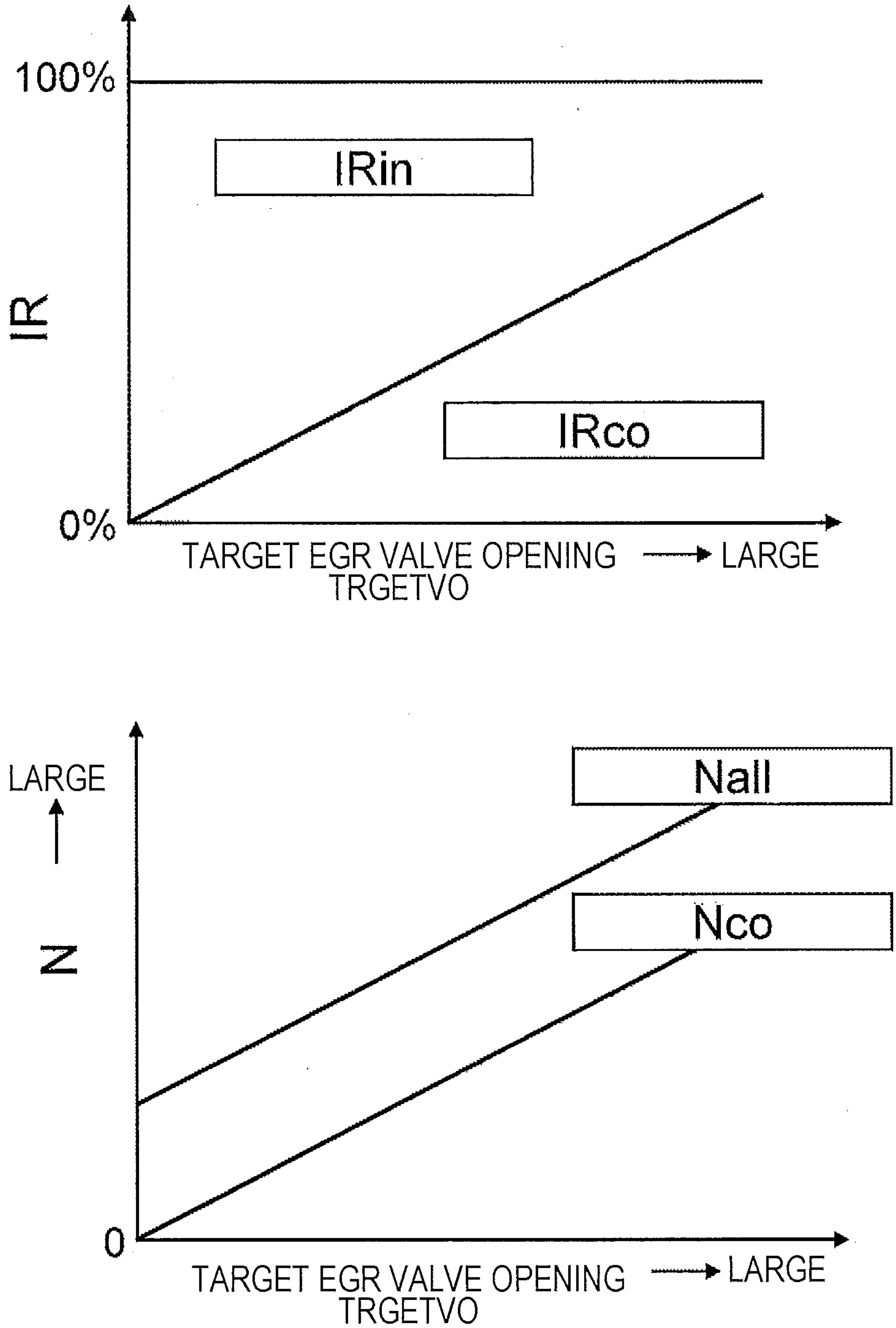
100%
IRin
IR
IRco
0%
TARGET EGR VALVE OPENING TRGETVO
LARGE
LARGE
N
Nall
Nco
0
TARGET EGR VALVE OPENING TRGETVO
LARGE

FIG. 13

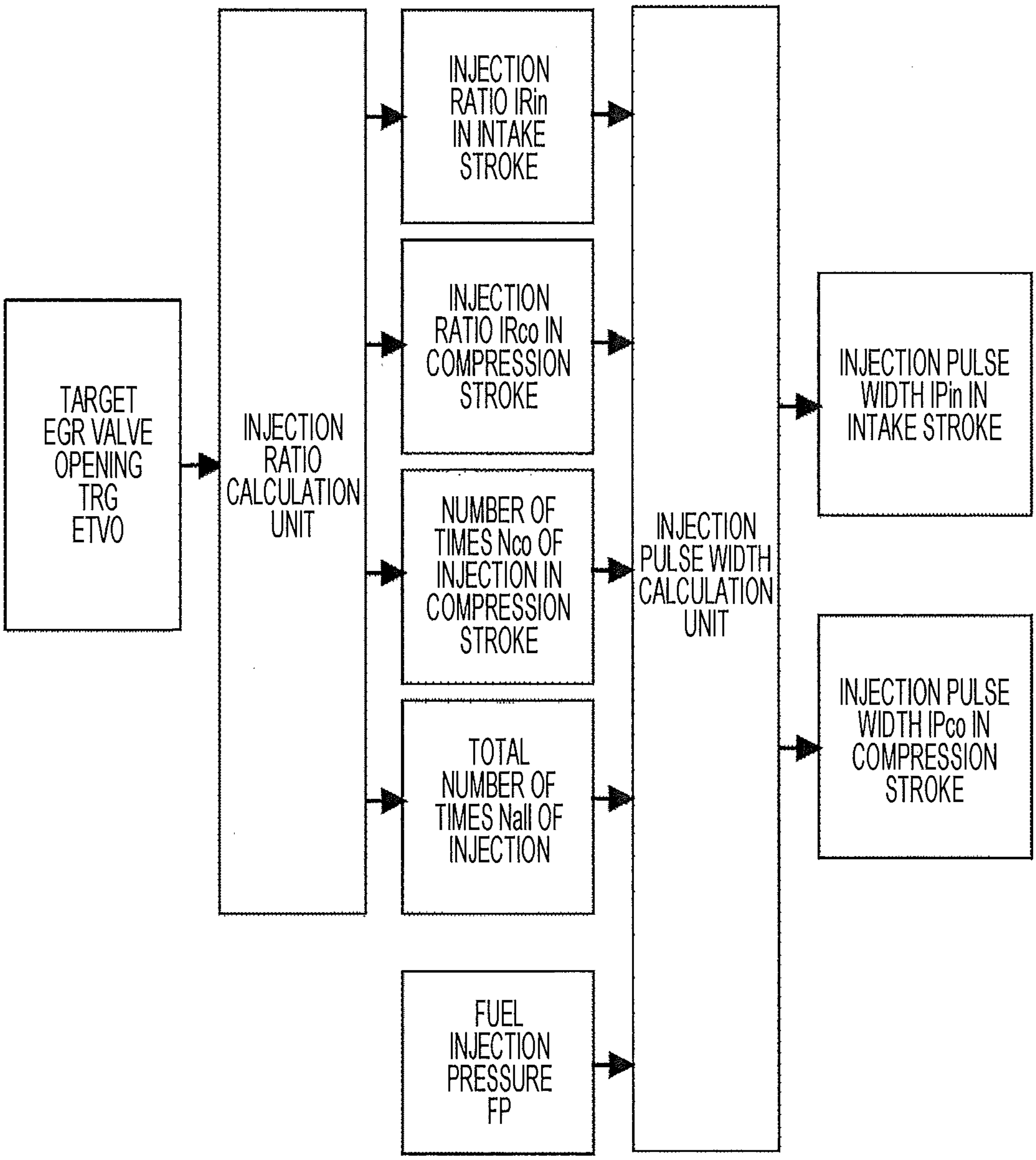
TARGET EGR VALVE OPENING TRG ETVO
INJECTION RATIO CALCULATION UNIT
INJECTION RATIO IRin IN INTAKE STROKE
INJECTION RATIO IRco IN COMPRESSION STROKE
NUMBER OF TIMES Nco OF INJECTION IN COMPRESSION STROKE
TOTAL NUMBER OF TIMES Nall OF INJECTION
FUEL INJECTION PRESSURE FP
INJECTION PULSE WIDTH CALCULATION UNIT
INJECTION PULSE WIDTH IPin IN INTAKE STROKE
INJECTION PULSE WIDTH IPco IN COMPRESSION STROKE

FIG. 14

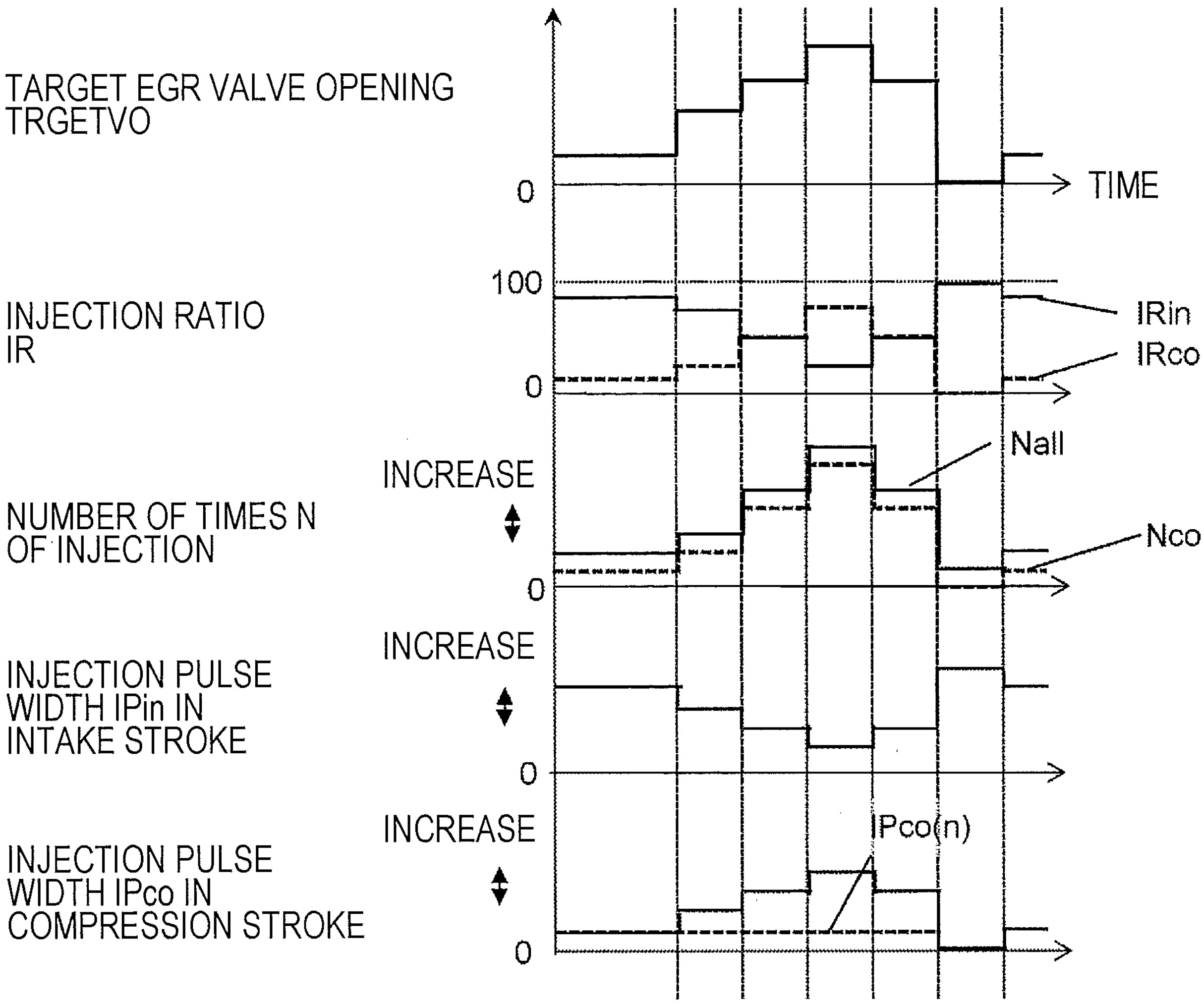
TARGET EGR VALVE OPENING
TRGETVO
0
TIME
100
INJECTION RATIO
IR
IRin
IRco
0
Nall
INCREASE
NUMBER OF TIMES N
OF INJECTION
Nco
0
INCREASE
INJECTION PULSE
WIDTH IPin IN
INTAKE STROKE
0
INCREASE
IPco(n)
INJECTION PULSE
WIDTH IPco IN
COMPRESSION STROKE
0

FIG. 15

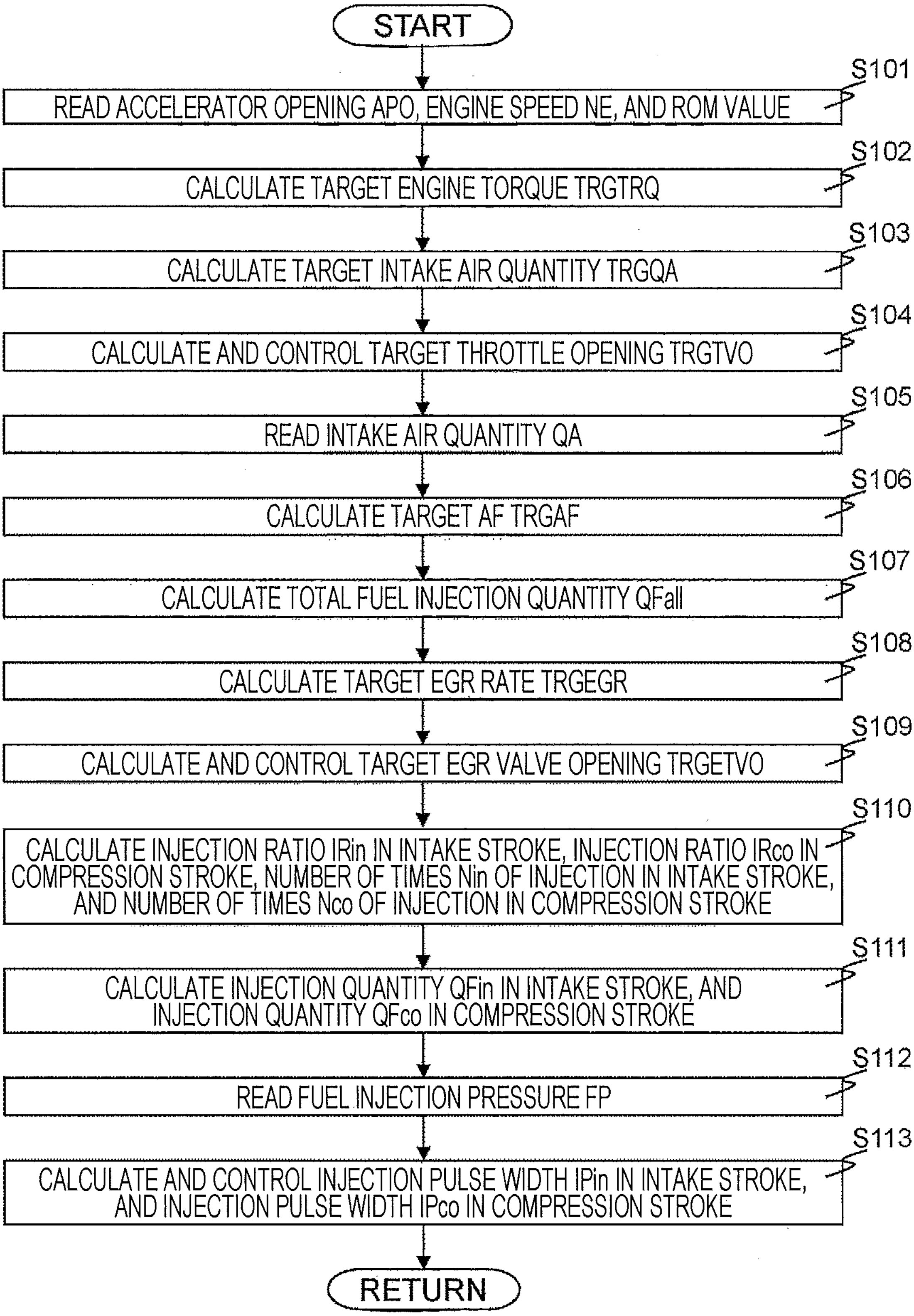
START
S101
READ ACCELERATOR OPENING APO, ENGINE SPEED NE, AND ROM VALUE
S102
CALCULATE TARGET ENGINE TORQUE TRGTRQ
S103
CALCULATE TARGET INTAKE AIR QUANTITY TRGQA
S104
CALCULATE AND CONTROL TARGET THROTTLE OPENING TRGTVO
S105
READ INTAKE AIR QUANTITY QA
S106
CALCULATE TARGET AF TRGAF
S107
CALCULATE TOTAL FUEL INJECTION QUANTITY QFall
S108
CALCULATE TARGET EGR RATE TRGEGR
S109
CALCULATE AND CONTROL TARGET EGR VALVE OPENING TRGETVO
S110
CALCULATE INJECTION RATIO IRin IN INTAKE STROKE, INJECTION RATIO IRco IN COMPRESSION STROKE, NUMBER OF TIMES Nin OF INJECTION IN INTAKE STROKE, AND NUMBER OF TIMES Nco OF INJECTION IN COMPRESSION STROKE
S111
CALCULATE INJECTION QUANTITY QFin IN INTAKE STROKE, AND INJECTION QUANTITY QFco IN COMPRESSION STROKE
S112
READ FUEL INJECTION PRESSURE FP
S113
CALCULATE AND CONTROL INJECTION PULSE WIDTH IPin IN INTAKE STROKE, AND INJECTION PULSE WIDTH IPco IN COMPRESSION STROKE
RETURN

FIG. 16

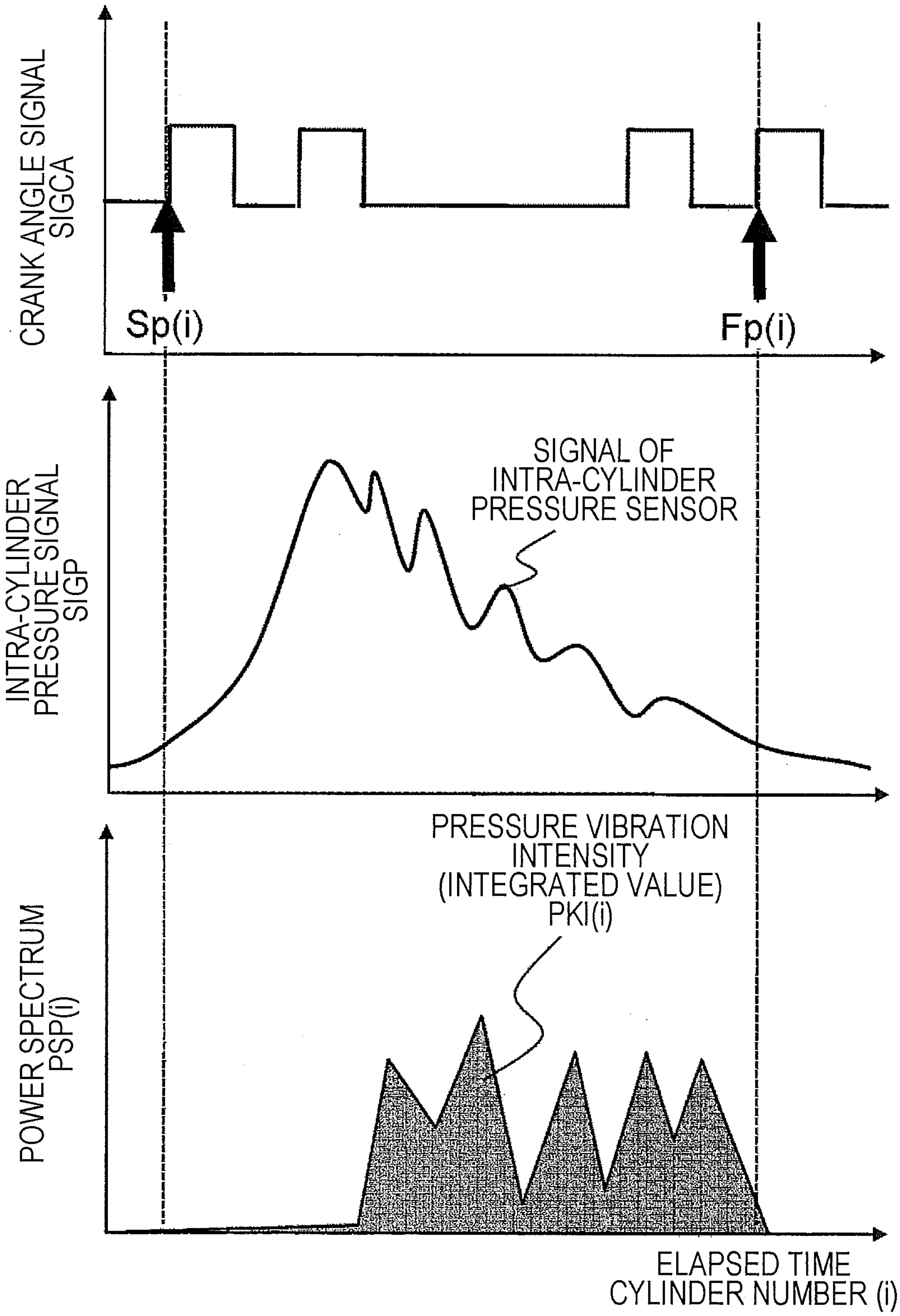
CRANK ANGLE SIGNAL
SIGCA
Sp(i)
Fp(i)
INTRA-CYLINDER
PRESSURE SIGNAL
SIGP
SIGNAL OF
INTRA-CYLINDER
PRESSURE SENSOR
POWER SPECTRUM
PSP(i)
PRESSURE VIBRATION
INTENSITY
(INTEGRATED VALUE)
PKI(i)
ELAPSED TIME
CYLINDER NUMBER (i)

FIG. 17

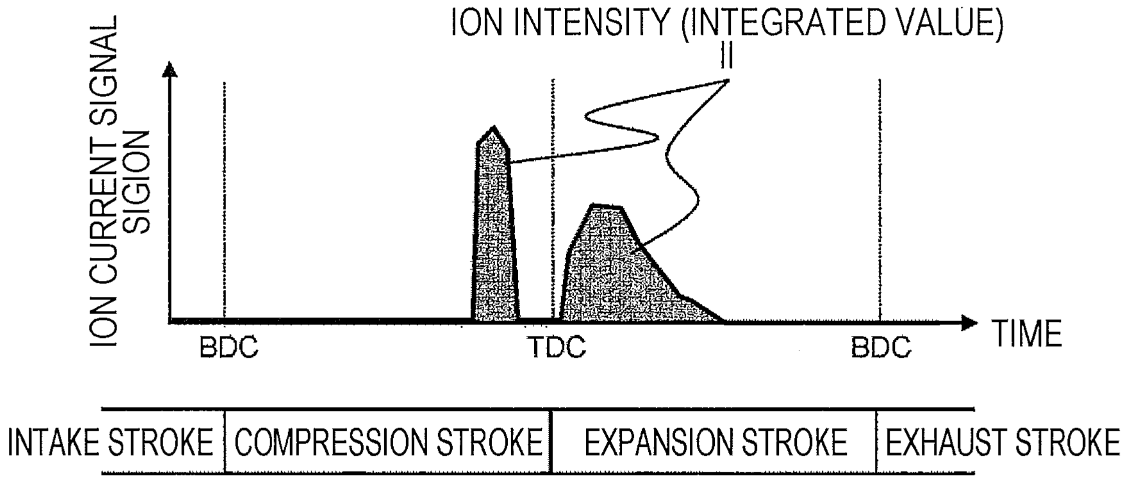
ION INTENSITY (INTEGRATED VALUE)
II
ION CURRENT SIGNAL
SIGION
BDC
TDC
BDC
TIME
INTAKE STROKE
COMPRESSION STROKE
EXPANSION STROKE
EXHAUST STROKE

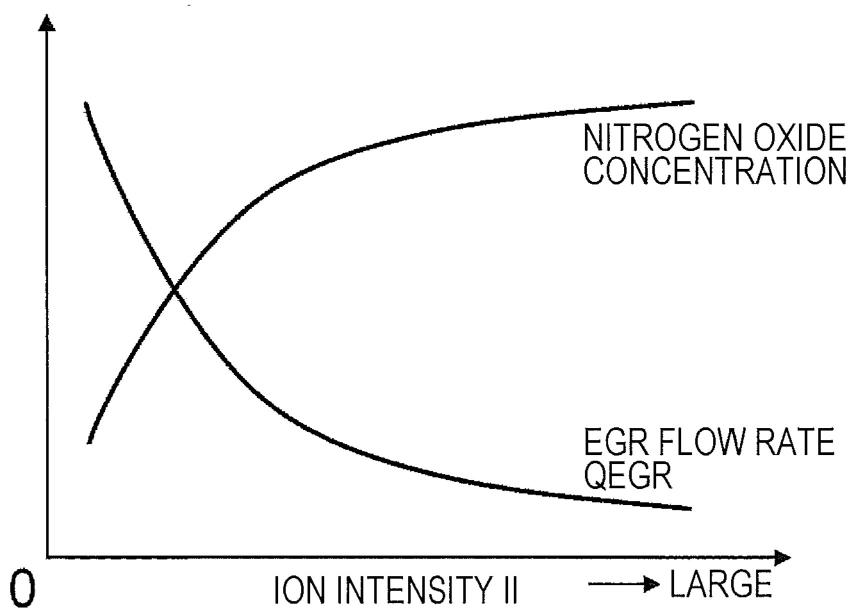
NITROGEN OXIDE
CONCENTRATION
EGR FLOW RATE
QEGR
0
ION INTENSITY II
LARGE

FIG. 18

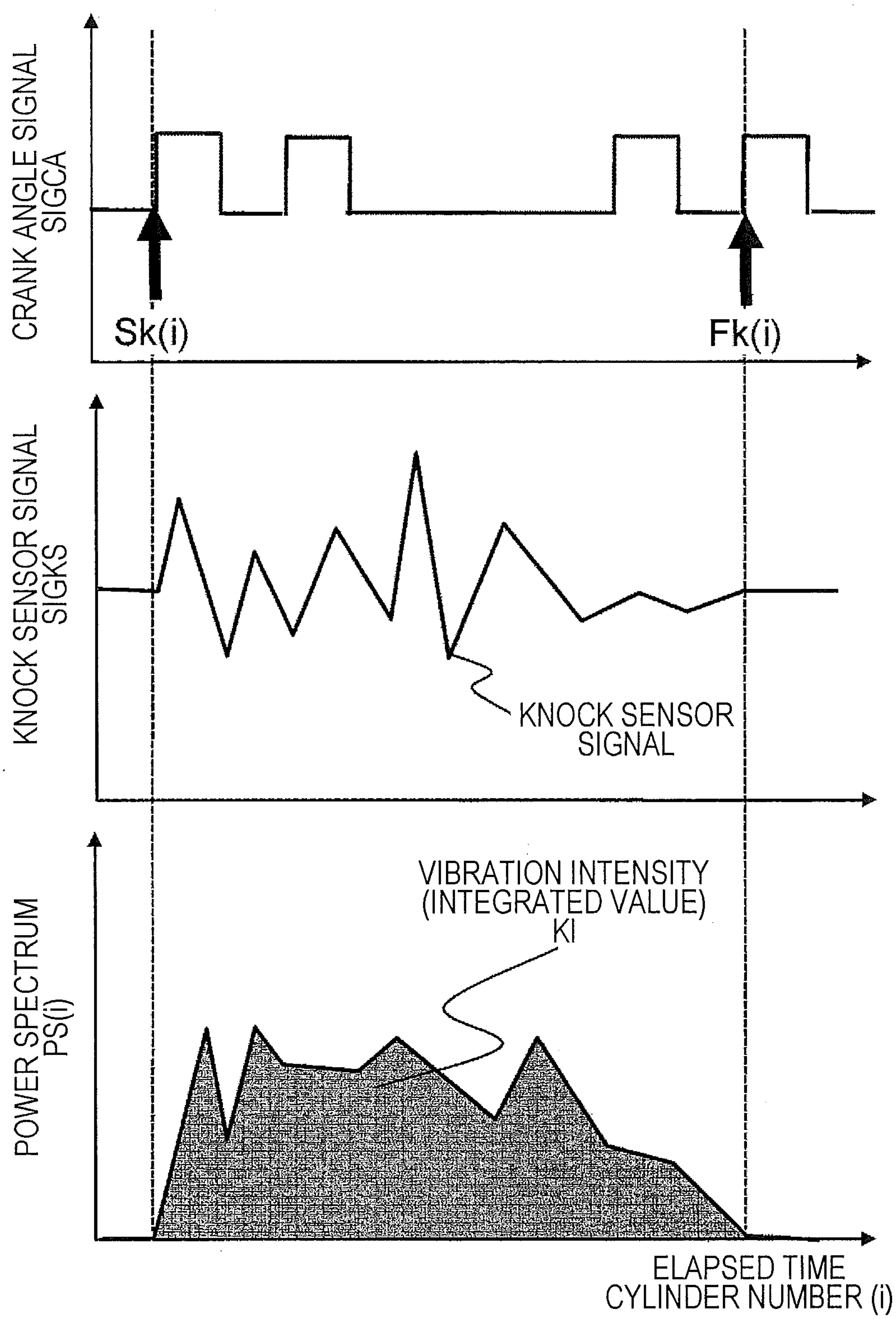
CRANK ANGLE SIGNAL
SIGCA
Sk(i)
Fk(i)
KNOCK SENSOR SIGNAL
SIGKS
KNOCK SENSOR
SIGNAL
POWER SPECTRUM
PS(i)
VIBRATION INTENSITY
(INTEGRATED VALUE)
KI
ELAPSED TIME
CYLINDER NUMBER (i)

FIG. 19

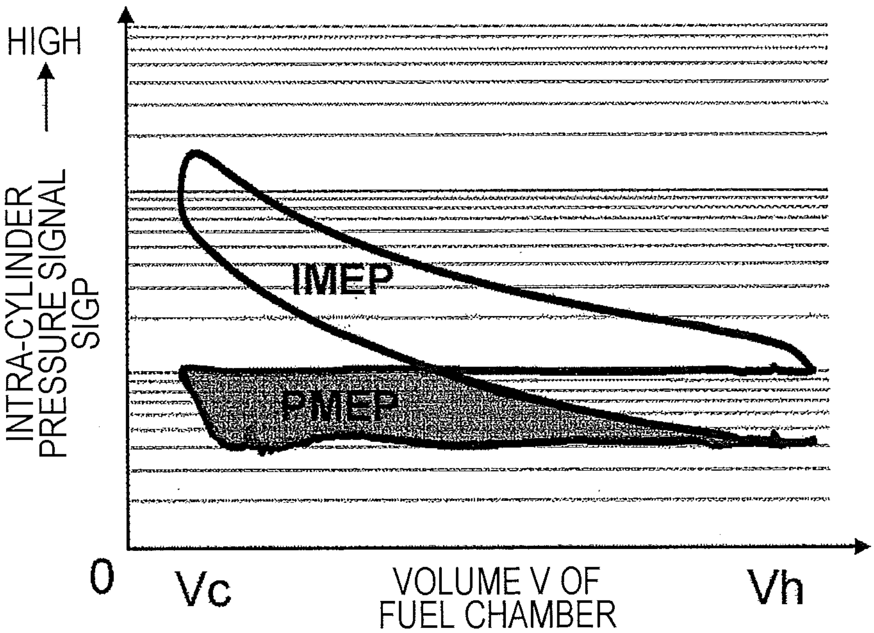
HIGH
INTRA-CYLINDER PRESSURE SIGNAL SIGP
IMEP
PMEP
0
Vc
VOLUME V OF FUEL CHAMBER
Vh

FIG. 20

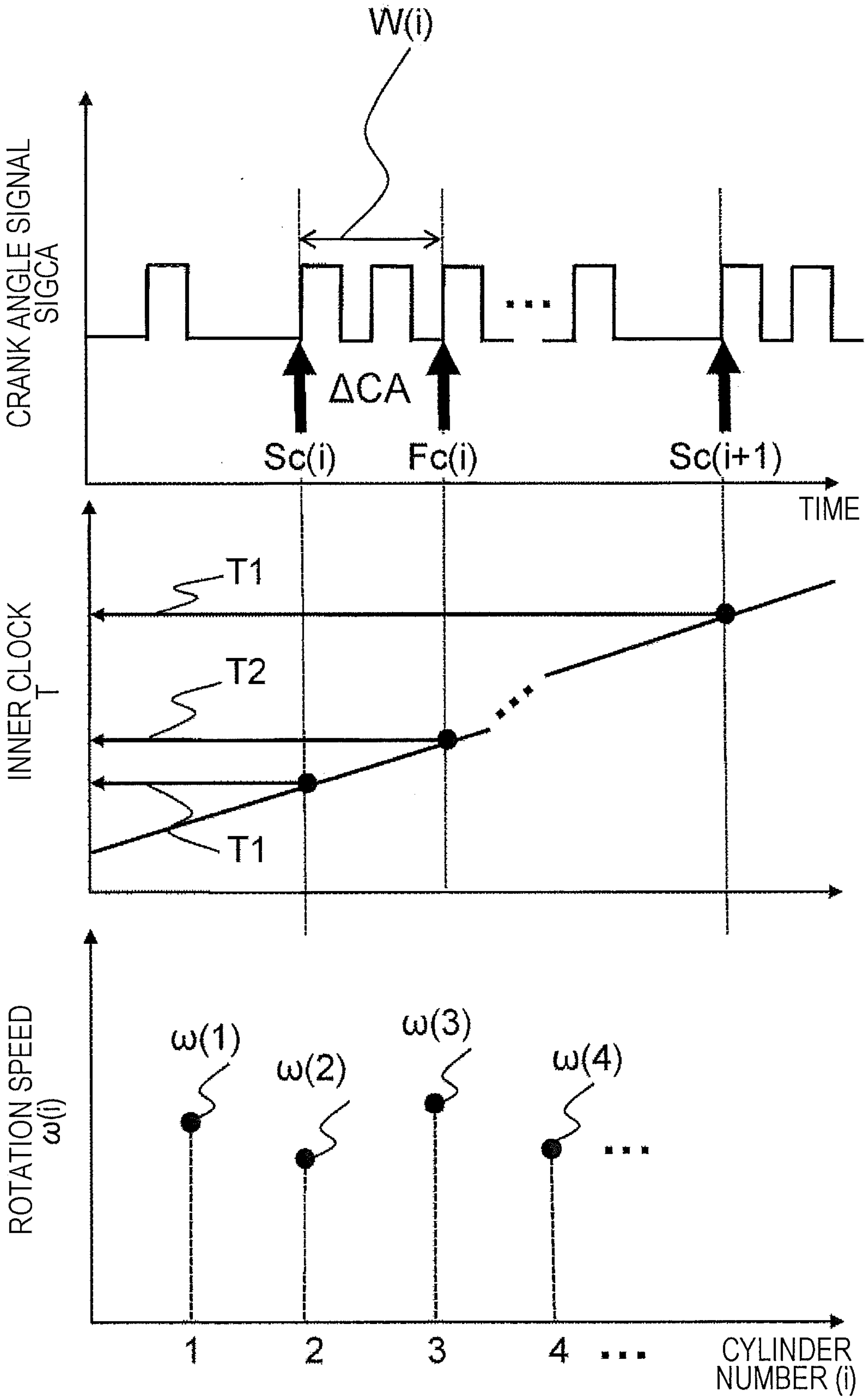
W(i)
CRANK ANGLE SIGNAL
SIGCA
ΔCA
Sc(i)
Fc(i)
Sc(i+1)
TIME
INNER CLOCK
T
T1
T2
T1
ROTATION SPEED
ω(i)
ω(1)
ω(2)
ω(3)
ω(4)
1
2
3
4
CYLINDER
NUMBER (i)

FIG. 21

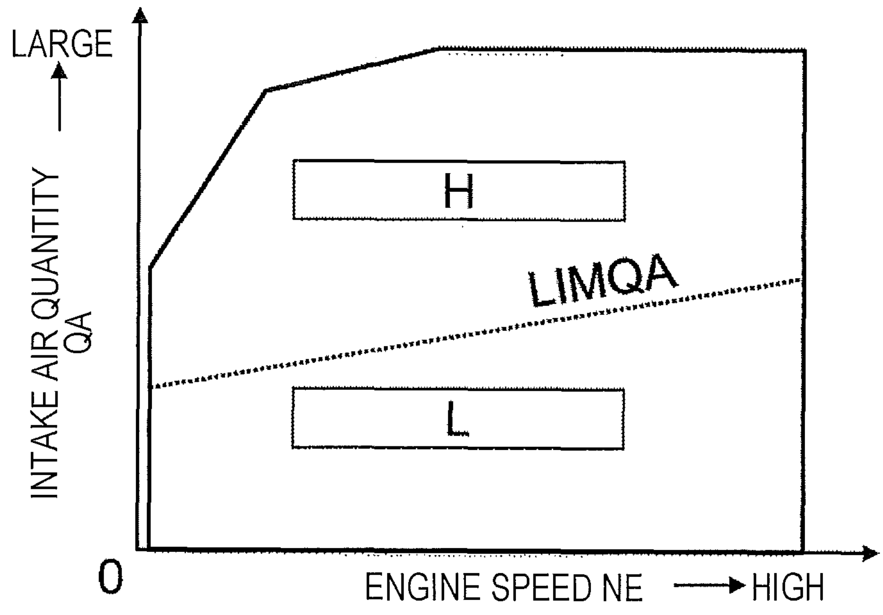
LARGE
INTAKE AIR QUANTITY QA
H
LIMQA
L
0
ENGINE SPEED NE
HIGH

FIG. 22

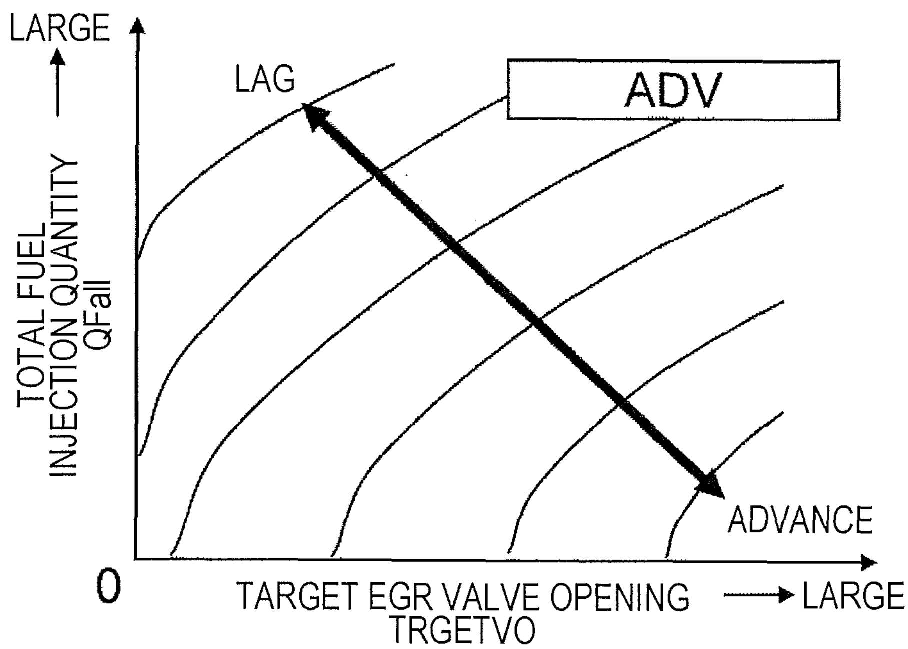
LARGE
TOTAL FUEL INJECTION QUANTITY QFall
LAG
ADV
ADVANCE
0
TARGET EGR VALVE OPENING TRGETVO
LARGE

FIG. 23

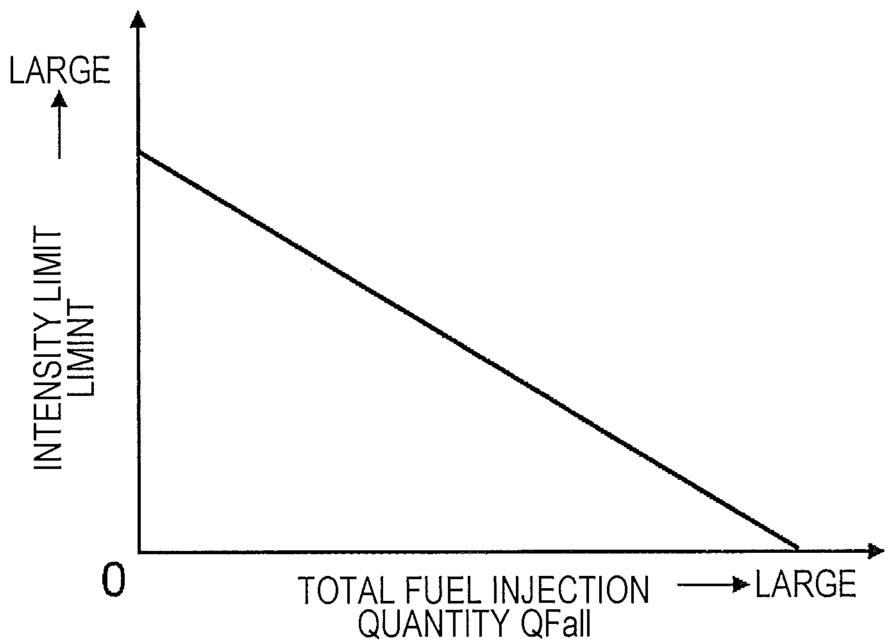
LARGE
INTENSITY LIMIT
LIMINT
0
TOTAL FUEL INJECTION
QUANTITY QFall
LARGE

FIG. 24

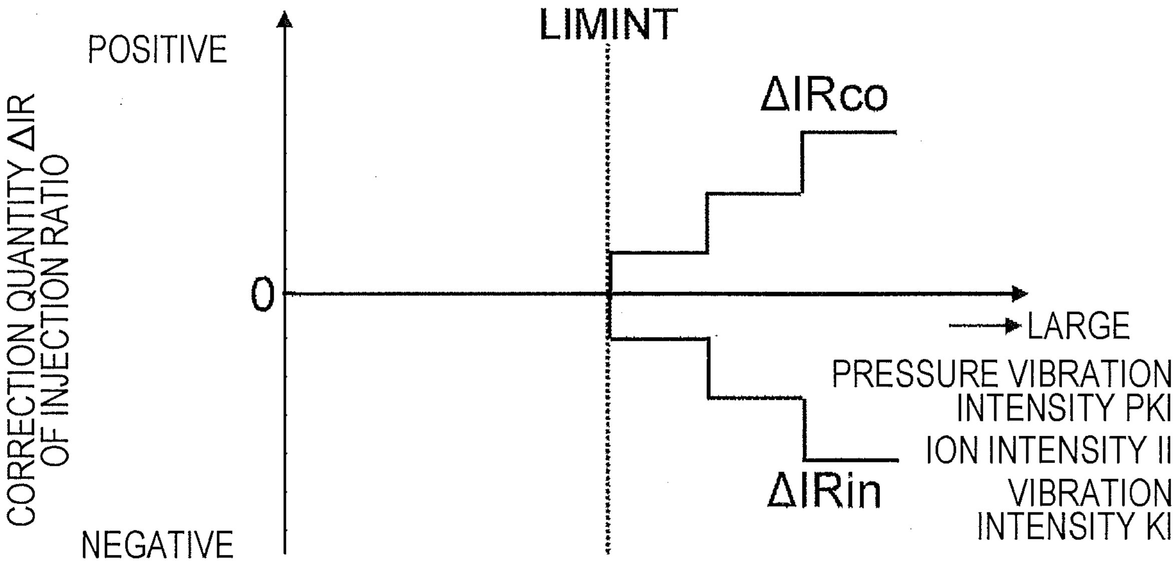
LIMINT
POSITIVE
CORRECTION QUANTITY ΔIR OF INJECTION RATIO
ΔIRco
0
LARGE
PRESSURE VIBRATION INTENSITY PKI
ION INTENSITY II
VIBRATION INTENSITY KI
ΔIRin
NEGATIVE

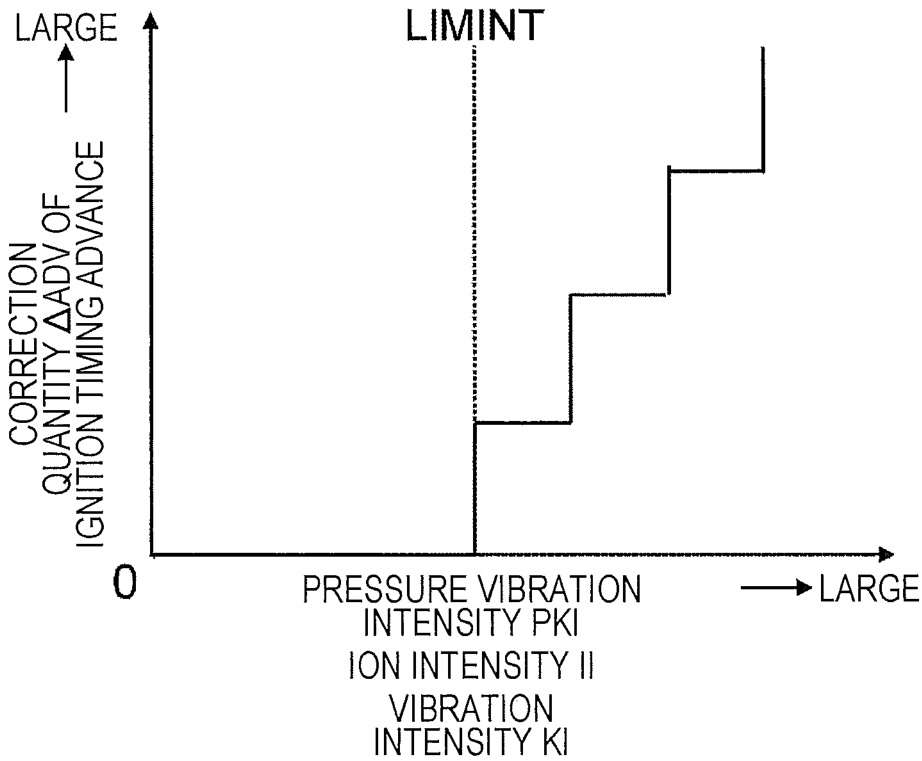
LARGE
LIMINT
CORRECTION QUANTITY ΔADV OF IGNITION TIMING ADVANCE
0
PRESSURE VIBRATION INTENSITY PKI
ION INTENSITY II
VIBRATION INTENSITY KI
LARGE

FIG. 25

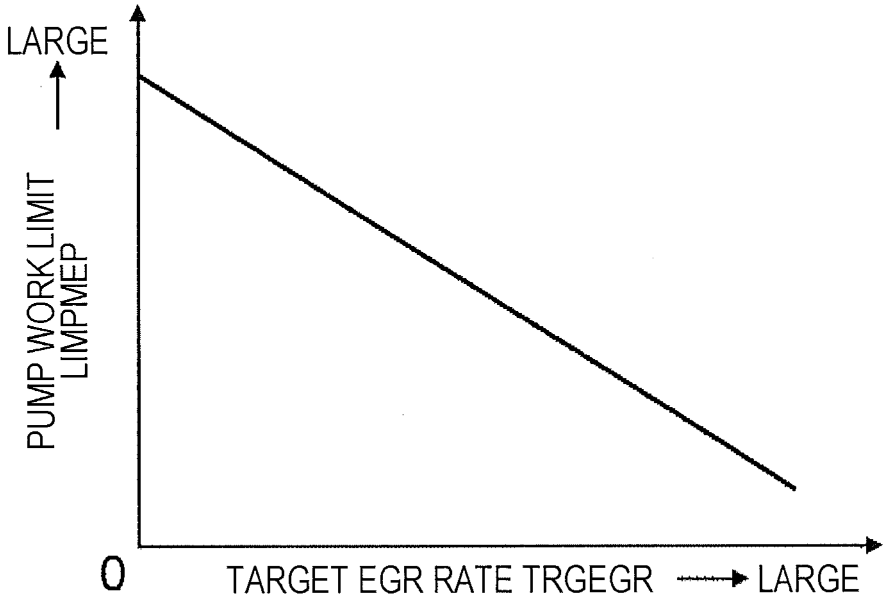
LARGE
PUMP WORK LIMIT
LIMPMEP
0
TARGET EGR RATE TRGEGR
LARGE

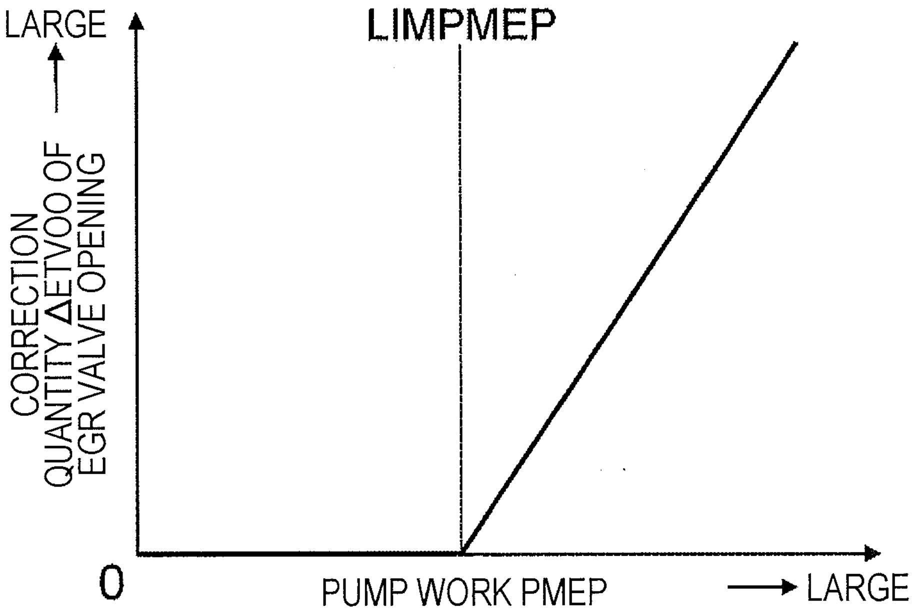
LARGE
LIMPMEP
CORRECTION
QUANTITY ΔETVOO OF
EGR VALVE OPENING
0
PUMP WORK PMEP
LARGE

FIG. 26

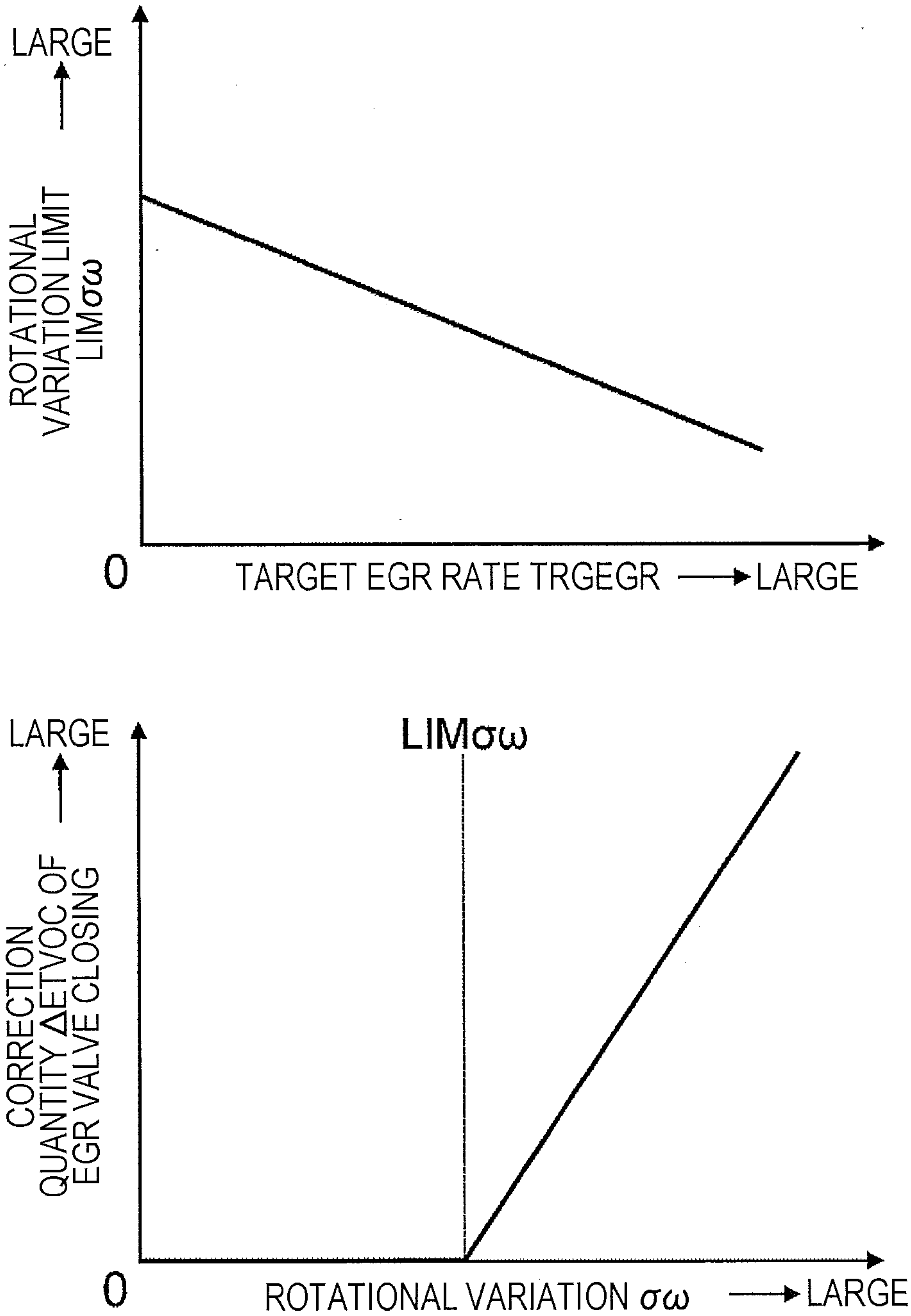
LARGE
ROTATIONAL VARIATION LIMIT LIMσω
0
TARGET EGR RATE TRGEGR
LARGE
LARGE
LIMσω
CORRECTION QUANTITY ΔETVOC OF EGR VALVE CLOSING
0
ROTATIONAL VARIATION σω
LARGE

# FIG. 27

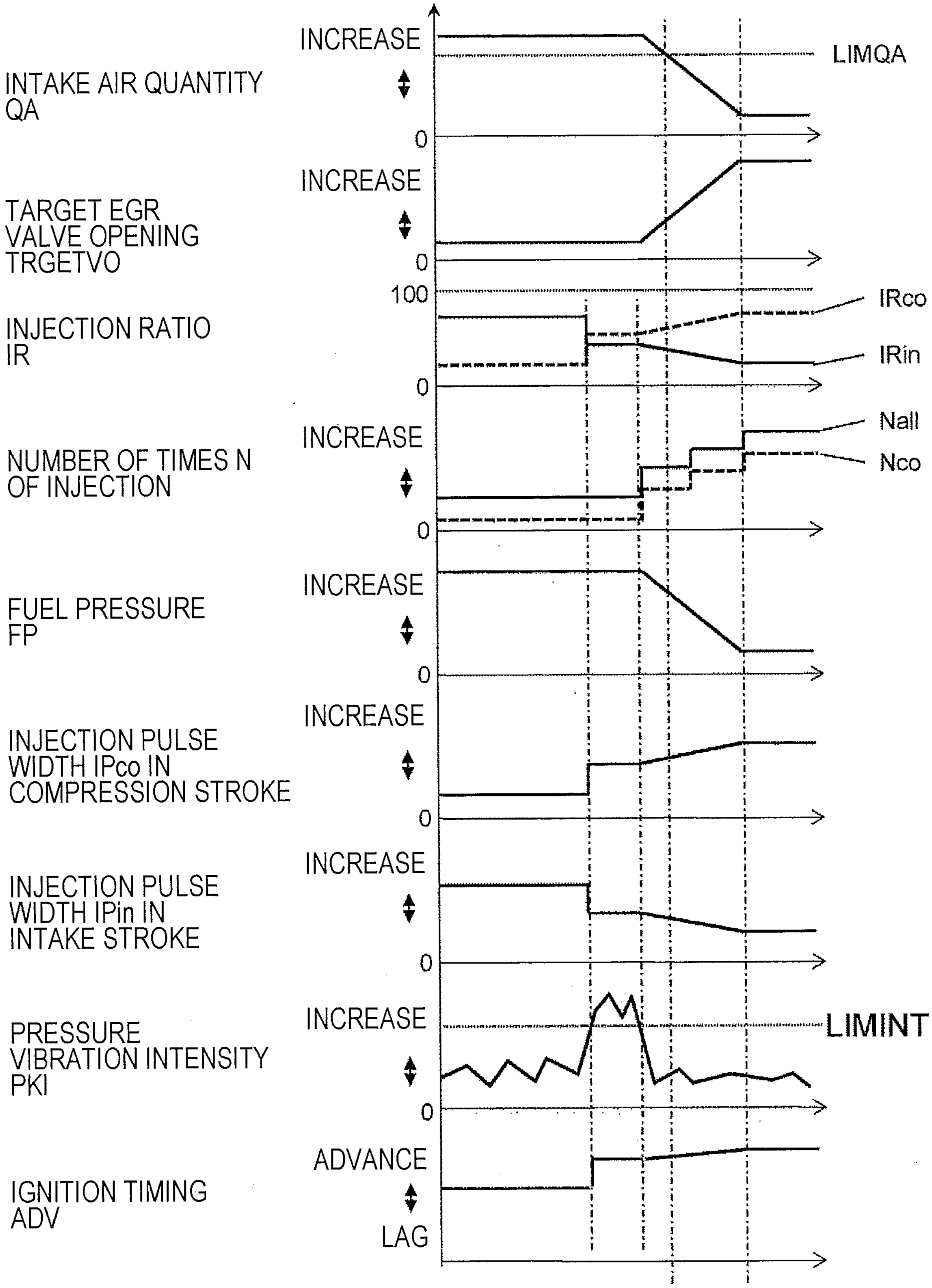
INTAKE AIR QUANTITY QA
INCREASE
0
LIMQA
TARGET EGR VALVE OPENING TRGETVO
INCREASE
0
INJECTION RATIO IR
100
0
IRco
IRin
NUMBER OF TIMES N OF INJECTION
INCREASE
0
Nall
Nco
FUEL PRESSURE FP
INCREASE
0
INJECTION PULSE WIDTH IPco IN COMPRESSION STROKE
INCREASE
0
INJECTION PULSE WIDTH IPin IN INTAKE STROKE
INCREASE
0
PRESSURE VIBRATION INTENSITY PKI
INCREASE
0
LIMINT
IGNITION TIMING ADV
ADVANCE
LAG

FIG. 28

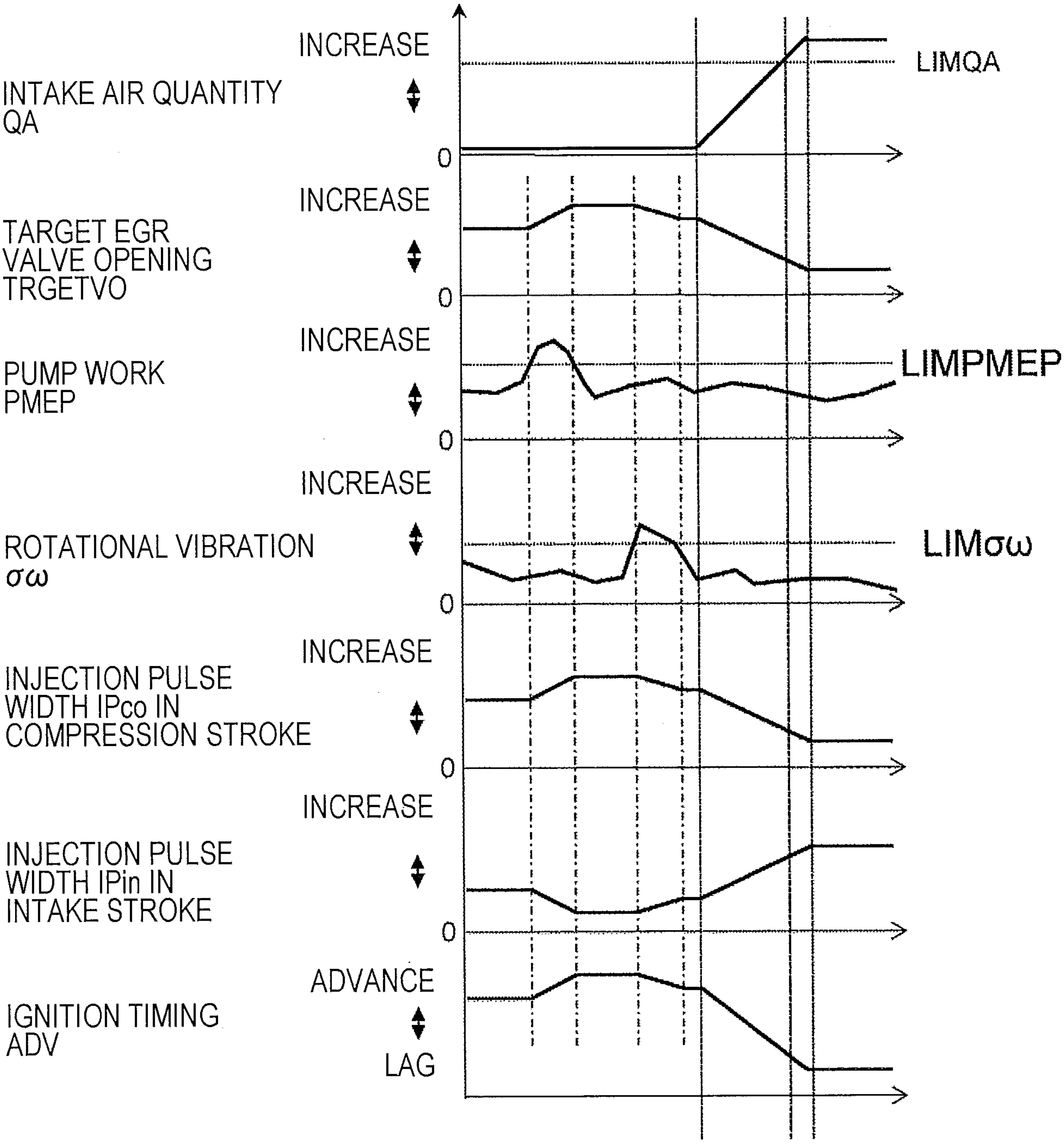
INCREASE
INTAKE AIR QUANTITY
QA
0
LIMQA
INCREASE
TARGET EGR
VALVE OPENING
TRGETVO
0
INCREASE
PUMP WORK
PMEP
0
LIMPMEP
INCREASE
ROTATIONAL VIBRATION
σω
0
LIMσω
INCREASE
INJECTION PULSE
WIDTH IPco IN
COMPRESSION STROKE
0
INCREASE
INJECTION PULSE
WIDTH IPin IN
INTAKE STROKE
0
ADVANCE
IGNITION TIMING
ADV
LAG

FIG. 29

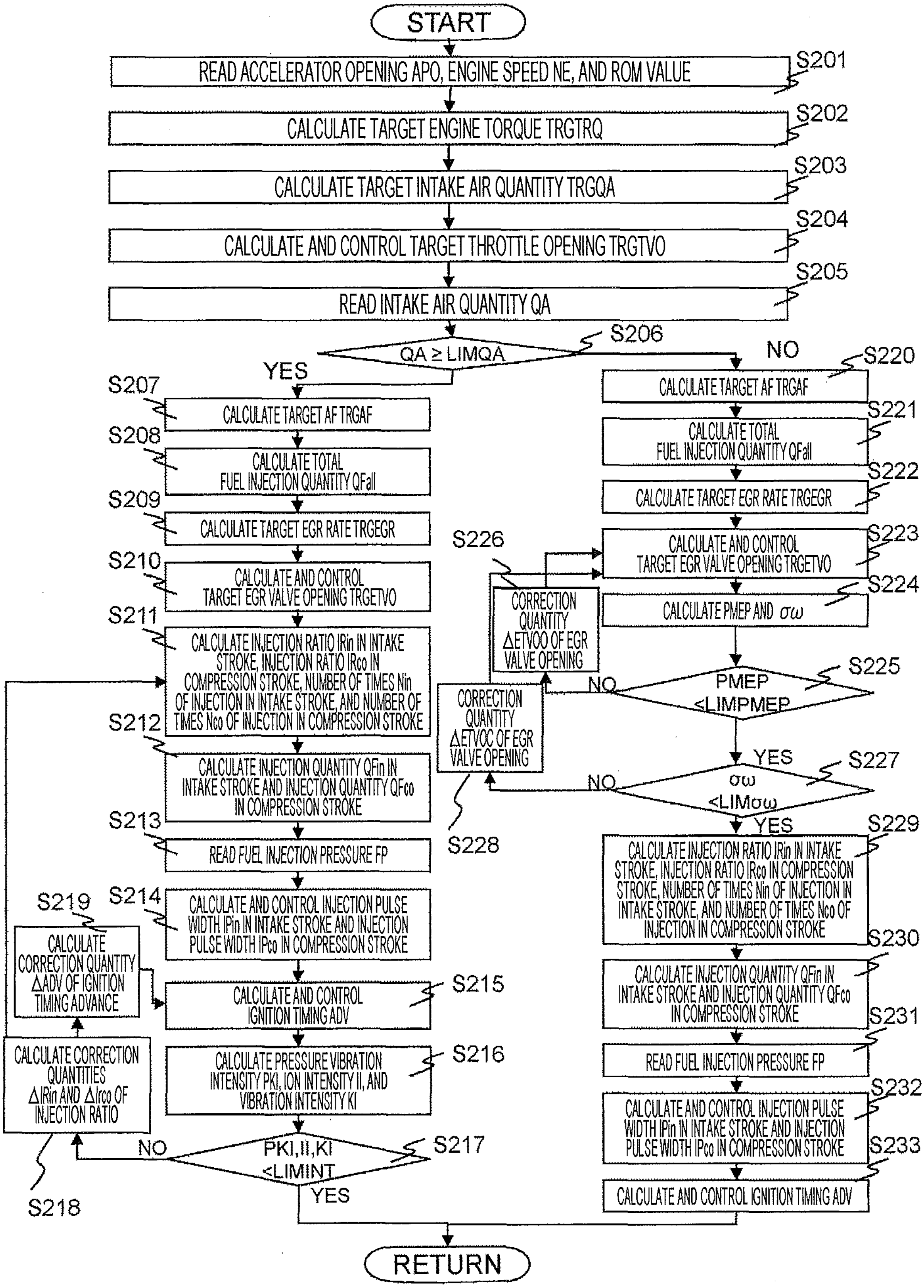
START
READ ACCELERATOR OPENING APO, ENGINE SPEED NE, AND ROM VALUE
S201
CALCULATE TARGET ENGINE TORQUE TRGTRQ
S202
CALCULATE TARGET INTAKE AIR QUANTITY TRGQA
S203
CALCULATE AND CONTROL TARGET THROTTLE OPENING TRGTVO
S204
READ INTAKE AIR QUANTITY QA
S205
QA ≥ LIMQA
S206
YES
NO
S207
CALCULATE TARGET AF TRGAF
S208
CALCULATE TOTAL FUEL INJECTION QUANTITY QFall
S209
CALCULATE TARGET EGR RATE TRGEGR
S210
CALCULATE AND CONTROL TARGET EGR VALVE OPENING TRGETVO
S211
CALCULATE INJECTION RATIO IRin IN INTAKE STROKE, INJECTION RATIO IRco IN COMPRESSION STROKE, NUMBER OF TIMES Nin OF INJECTION IN INTAKE STROKE, AND NUMBER OF TIMES Nco OF INJECTION IN COMPRESSION STROKE
S212
CALCULATE INJECTION QUANTITY QFin IN INTAKE STROKE AND INJECTION QUANTITY QFco IN COMPRESSION STROKE
S213
READ FUEL INJECTION PRESSURE FP
S214
CALCULATE AND CONTROL INJECTION PULSE WIDTH IPin IN INTAKE STROKE AND INJECTION PULSE WIDTH IPco IN COMPRESSION STROKE
S215
CALCULATE AND CONTROL IGNITION TIMING ADV
S216
CALCULATE PRESSURE VIBRATION INTENSITY PKI, ION INTENSITY II, AND VIBRATION INTENSITY KI
S217
PKI,II,KI <LIMINT
NO
YES
S218
CALCULATE CORRECTION QUANTITIES ΔIRin AND ΔIrco OF INJECTION RATIO
S219
CALCULATE CORRECTION QUANTITY ΔADV OF IGNITION TIMING ADVANCE
S220
CALCULATE TARGET AF TRGAF
S221
CALCULATE TOTAL FUEL INJECTION QUANTITY QFall
S222
CALCULATE TARGET EGR RATE TRGEGR
S223
CALCULATE AND CONTROL TARGET EGR VALVE OPENING TRGETVO
S224
CALCULATE PMEP AND σω
S225
PMEP <LIMPMEP
NO
YES
S226
CORRECTION QUANTITY ΔETVOO OF EGR VALVE OPENING
S227
σω <LIMσω
NO
YES
S228
CORRECTION QUANTITY ΔETVOC OF EGR VALVE OPENING
S229
CALCULATE INJECTION RATIO IRin IN INTAKE STROKE, INJECTION RATIO IRco IN COMPRESSION STROKE, NUMBER OF TIMES Nin OF INJECTION IN INTAKE STROKE, AND NUMBER OF TIMES Nco OF INJECTION IN COMPRESSION STROKE
S230
CALCULATE INJECTION QUANTITY QFin IN INTAKE STROKE AND INJECTION QUANTITY QFco IN COMPRESSION STROKE
S231
READ FUEL INJECTION PRESSURE FP
S232
CALCULATE AND CONTROL INJECTION PULSE WIDTH IPin IN INTAKE STROKE AND INJECTION PULSE WIDTH IPco IN COMPRESSION STROKE
S233
CALCULATE AND CONTROL IGNITION TIMING ADV
RETURN

FIG. 30

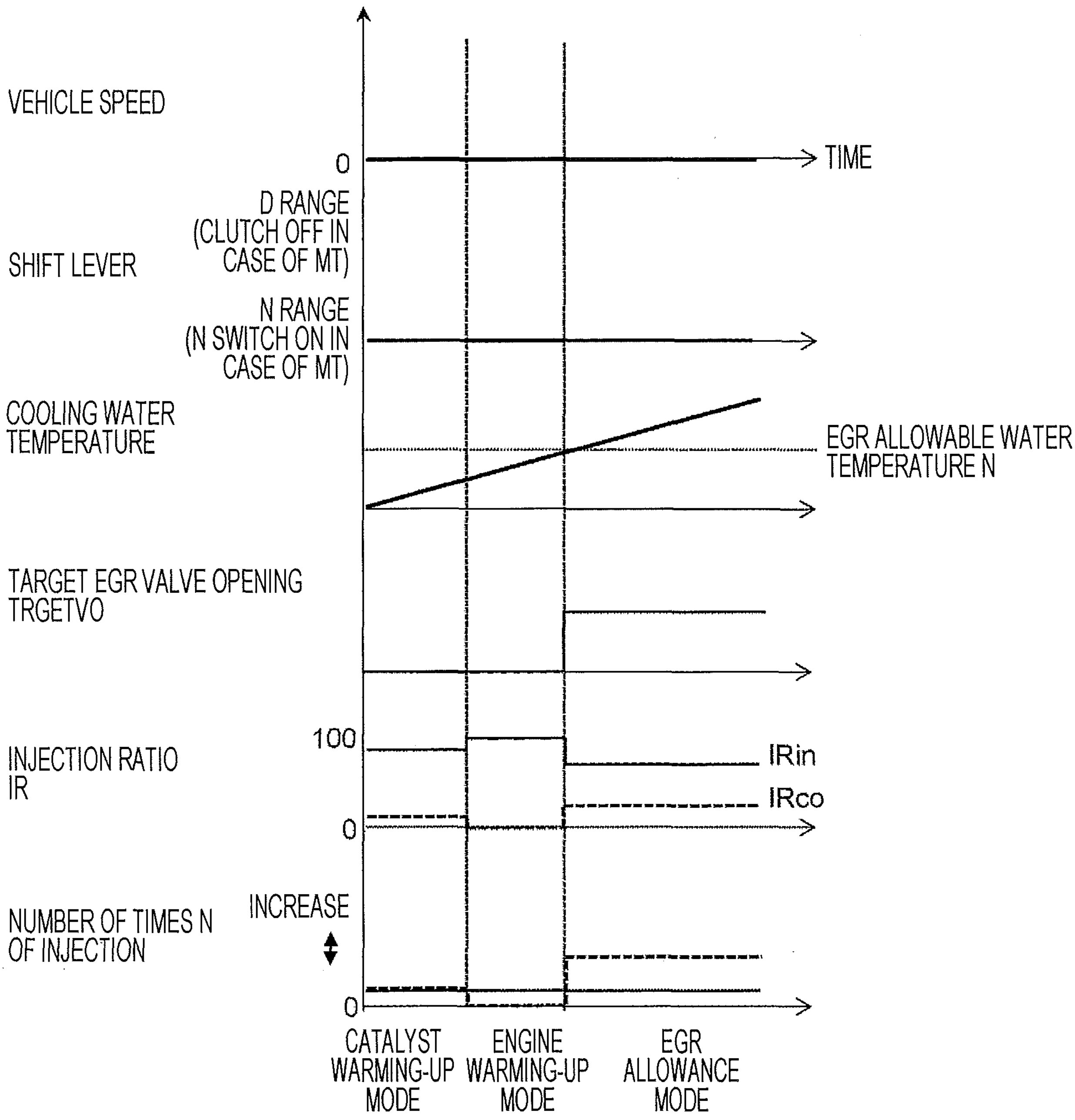
VEHICLE SPEED
0
TIME
SHIFT LEVER
D RANGE (CLUTCH OFF IN CASE OF MT)
N RANGE (N SWITCH ON IN CASE OF MT)
COOLING WATER TEMPERATURE
EGR ALLOWABLE WATER TEMPERATURE N
TARGET EGR VALVE OPENING TRGETVO
INJECTION RATIO IR
100
IRin
IRco
0
NUMBER OF TIMES N OF INJECTION
INCREASE
0
CATALYST WARMING-UP MODE
ENGINE WARMING-UP MODE
EGR ALLOWANCE MODE

FIG. 31

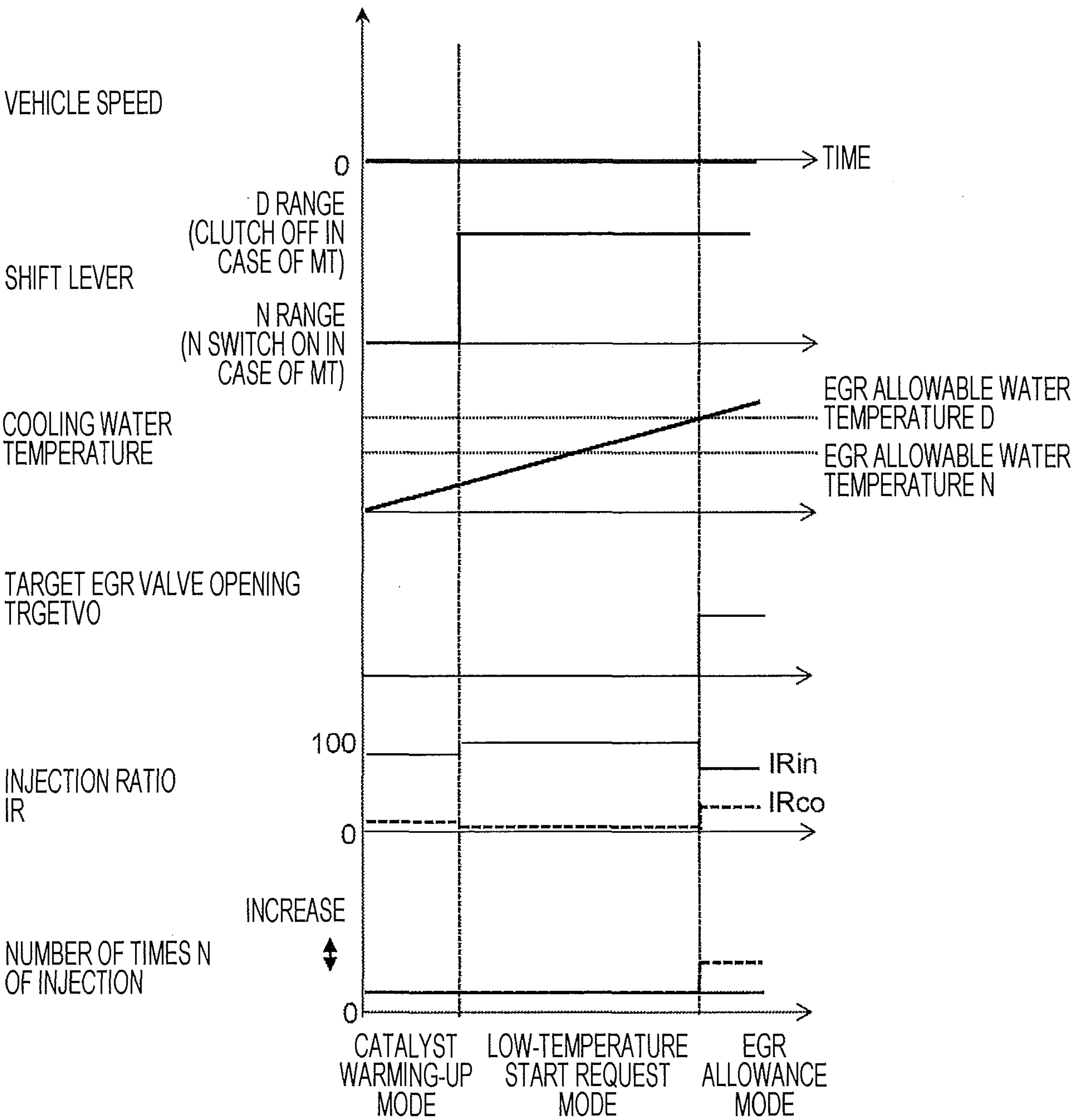
VEHICLE SPEED
0
TIME
D RANGE
(CLUTCH OFF IN
CASE OF MT)
SHIFT LEVER
N RANGE
(N SWITCH ON IN
CASE OF MT)
COOLING WATER
TEMPERATURE
EGR ALLOWABLE WATER
TEMPERATURE D
EGR ALLOWABLE WATER
TEMPERATURE N
TARGET EGR VALVE OPENING
TRGETVO
100
INJECTION RATIO
IR
IRin
IRco
0
INCREASE
NUMBER OF TIMES N
OF INJECTION
0
CATALYST
WARMING-UP
MODE
LOW-TEMPERATURE
START REQUEST
MODE
EGR
ALLOWANCE
MODE

FIG. 32

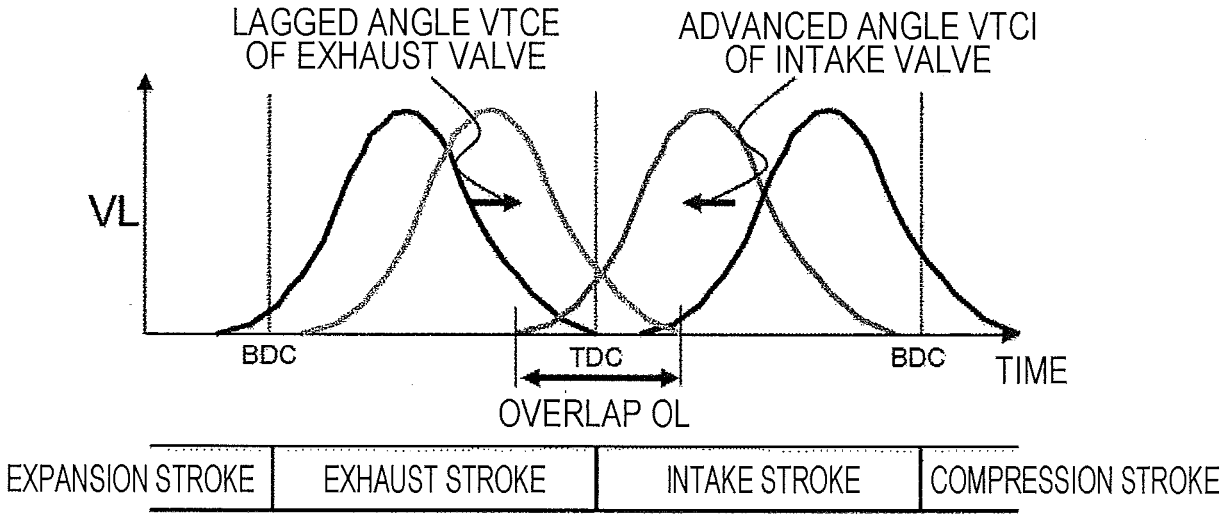
LAGGED ANGLE VTCE
OF EXHAUST VALVE
ADVANCED ANGLE VTCI
OF INTAKE VALVE
VL
BDC
TDC
BDC
TIME
OVERLAP OL
EXPANSION STROKE
EXHAUST STROKE
INTAKE STROKE
COMPRESSION STROKE

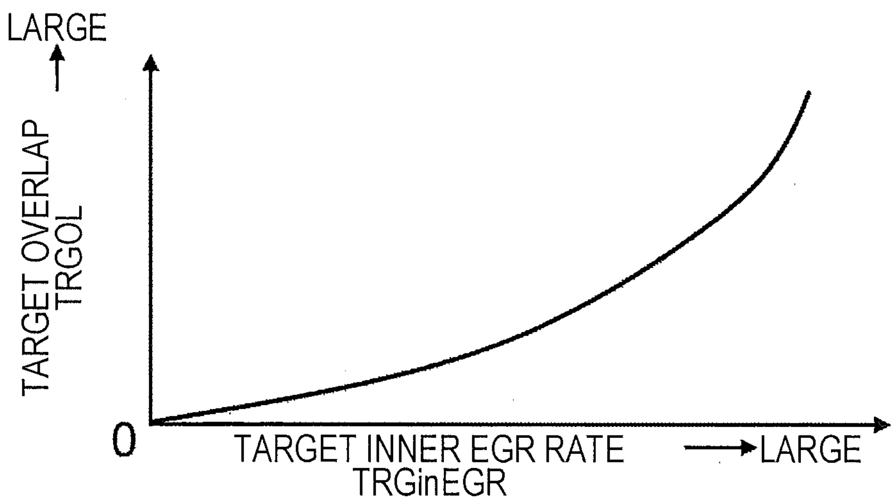
LARGE
TARGET OVERLAP
TRGOL
0
TARGET INNER EGR RATE
TRGinEGR
LARGE

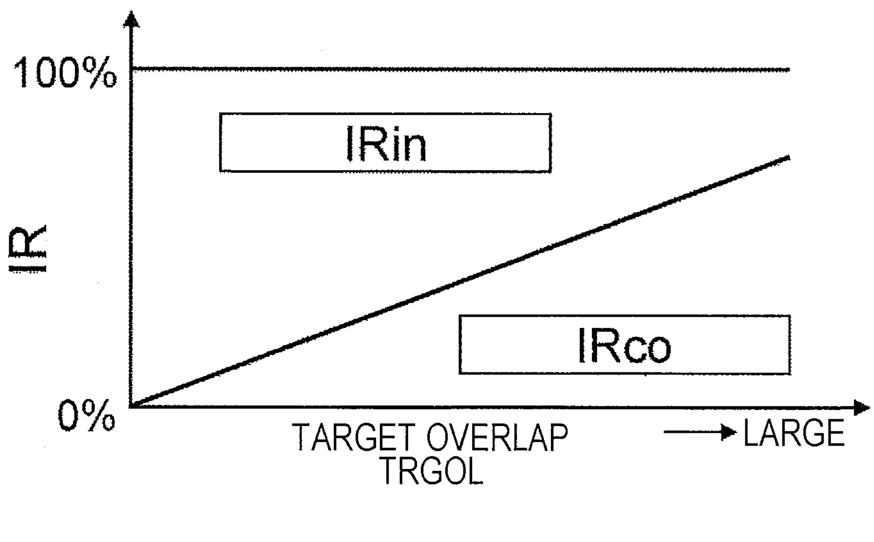
100%
IRin
IR
IRco
0%
TARGET OVERLAP
TRGOL
LARGE

## INTERNATIONAL SEARCH REPORT

International application No. PCT/JP2015/076210

A. CLASSIFICATION OF SUBJECT MATTER
*F02D21/08*(2006.01)i, *F02D41/02*(2006.01)i, *F02D41/04*(2006.01)i, *F02D45/00*(2006.01)i, *F02M26/00*(2016.01)i, *F02M26/14*(2016.01)i, *F02P5/15*(2006.01)i

According to International Patent Classification (IPC) or to both national classification and IPC

B. FIELDS SEARCHED

Minimum documentation searched (classification system followed by classification symbols)
F02D21/08, F02D41/02, F02D41/04, F02D45/00, F02M25/07, F02P5/15

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2008-175211 A (Honda Motor Co., Ltd.), 31 July 2008 (31.07.2008), paragraphs [0057], [0034] to [0036], [0077]; fig. 1, 4, 8 (Family: none) | 1-3,5-6<br>7,10<br>4,8-9 |
| Y | JP 2010-90856 A (Toyota Motor Corp.), 22 April 2010 (22.04.2010), paragraph [0002] (Family: none) | 7 |
| Y | JP 2014-173560 A (Honda Motor Co., Ltd.), 22 September 2014 (22.09.2014), paragraph [0041]; fig. 5 & US 2014/0261319 A1 paragraphs [0052] to [0053]; fig. 5 & DE 102014204434 A1 | 10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 November 2015 (27.11.15) | 08 December 2015 (08.12.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No. PCT/JP2015/076210

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-205262 A (Daihatsu Motor Co., Ltd.), 07 October 2013 (07.10.2013), paragraphs [0022], [0033] (Family: none) | 8-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004156519 A